(19) **Europäisches Patentamt / European Patent Office / Office européen des brevets**

(11) **EP 4 329 210 A1**

(12) **EUROPEAN PATENT APPLICATION**
published in accordance with Art. 153(4) EPC

(43) Date of publication:
**28.02.2024 Bulletin 2024/09**

(21) Application number: **22791996.6**

(22) Date of filing: **19.04.2022**

(51) International Patent Classification (IPC):
*H04B 7/0408* (2017.01)     *H04B 7/06* (2006.01)
*H04B 7/024* (2017.01)     *H04W 76/18* (2018.01)
*H04W 72/04* (2023.01)     *H04W 74/00* (2009.01)
*H04W 74/08* (2024.01)     *H04W 72/12* (2023.01)

(52) Cooperative Patent Classification (CPC):
**H04B 7/024; H04B 7/0408; H04B 7/06;**
**H04W 72/04; H04W 72/12; H04W 74/00;**
**H04W 74/08; H04W 76/18;** Y02D 30/70

(86) International application number:
**PCT/KR2022/005584**

(87) International publication number:
**WO 2022/225296 (27.10.2022 Gazette 2022/43)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **19.04.2021 KR 20210050625**

(71) Applicant: **LG Electronics Inc.**
**Yeongdeungpo-gu**
**Seoul 07336 (KR)**

(72) Inventors:
• **GO, Seongwon**
  **Seoul 06772 (KR)**
• **KANG, Jiwon**
  **Seoul 06772 (KR)**

(74) Representative: **Plasseraud IP**
**66, rue de la Chaussée d'Antin**
**75440 Paris Cedex 09 (FR)**

(54) **METHOD AND DEVICE FOR UPLINK TRANSMISSION AND RECEPTION IN WIRELESS COMMUNICATION SYSTEM**

(57)     A method and a device for uplink transmission and reception in a wireless communication system are disclosed. The method for uplink transmission for beam failure recovery (BFR) according to one embodiment of the present disclosure may comprise the steps of: receiving BFR-related configuration information for a base station, and performing uplink transmission for BFR to the base station, on the basis of which any one of a first beam failure and a second beam failure is detected in accordance with an assessment of the radio link quality with respect to a first beam failure detection (BFD) reference signal (RS) set and a second BFD RS set.

FIG.10

Receive configuration information related to BFR — S1001

Perform uplink transmission for BFR, based on one of first beam failure and second beam failure being detected according to assessment of radio link quality for first BFD RS set and second BFD RS set — S1002

**Description**

[Technical Field]

The present disclosure relates to a wireless communication system, and in more detail, relates to a method and an apparatus for transmitting and receiving uplink for beam failure recovery in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for supporting both a cell-specific beam failure detection/recovery procedure and a transmission reception point (TRP)-specific beam failure detection/recovery procedure for a specific cell or cell group, etc.

In addition, an additional technical object of the present disclosure is to provide a method and an apparatus for supporting a TRP-specific beam failure detection/recovery procedure for multiple cells belonging to one cell group.

The technical objects to be achieved by the present disclosure are not limited to the above-described technical objects, and other technical objects which are not described herein will be clearly understood by those skilled in the pertinent art from the following description.

[Technical Solution]

A method of performing uplink transmission for beam failure recovery (BFR) in a wireless communication system according to an aspect of the present disclosure may include: receiving, from a base station, configuration information related to BFR; and based on at least one of a first beam failure and a second beam failure being detected according to an assessment of radio link quality for a first beam failure detection (BFD) reference signal (RS) set and a second BFD RS set, performing, to the base station, uplink transmission for BFR. The configuration information may include information on a first PUCCH (physical uplink control channel) resource for BFR corresponding to the first BFD RS set and a second PUCCH resource for BFR corresponding to the second BDR RS set for a cell group, and based on a type of a cell in which one of the first beam failure and the second beam failure is detected in the cell group, a PUCCH resource for the uplink transmission may be determined among the first PUCCH resource and the second PUCCH resource.

A method of receiving uplink transmission for beam failure recovery (BFR) in a wireless communication system according to an additional aspect of the present disclosure may include: transmitting, from a user equipment (UE), configuration information related to BFR; and based on at least one of a first beam failure and a second beam failure being detected according to an assessment of radio link quality for a first beam failure detection (BFD) reference signal (RS) set and a second BFD RS set, receiving, from the UE, uplink transmission for BFR. The configuration information may include information on a first PUCCH (physical uplink control channel) resource for BFR corresponding to the first BFD RS set and a second PUCCH resource for BFR corresponding to the second BDR RS set for a cell group, and based on a type of a cell in which one of the first beam failure and the second beam failure is detected in the cell group, a PUCCH resource for the uplink transmission may be determined among the first PUCCH resource and the second PUCCH resource.

[Technical Effects]

According to an embodiment of the present disclosure, both a cell-specific beam failure detection/recovery procedure and a transmission reception point (TRP)-specific beam failure detection/recovery procedure can be supported for a specific cell or cell group.

In addition, according to an embodiment of the present disclosure, when both a cell-specific beam failure detection/recovery procedure and a TRP (transmission reception point) specific beam failure detection/recovery procedure are supported for a specific cell or cell group, etc., ambiguity in an operation of a user equipment can be prevented.

In addition, according to an embodiment of the present disclosure, when a TRP-specific beam failure detection/recovery procedure is supported for multiple cells belonging to a specific cell group, ambiguity in an operation of a user equipment can be prevented.

Effects achievable by the present disclosure are not limited to the above-described effects, and other effects which are not described herein may be clearly understood by those skilled in the pertinent art from the following description.

[Brief Description of the Drawings]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram which illustrates a beam failure recovery operation for a Pcell in a wireless communication system to which the present disclosure may be applied.
FIG. 8 illustrates a method of multiple TRPs transmission in a wireless communication system to which the present disclosure may be applied.
FIG. 9 illustrates a signaling method for an uplink transmission and reception method for beam failure recovery according to an embodiment of the present disclosure.
FIG. 10 is a diagram illustrating an operation of a terminal in an uplink transmission method for beam failure recovery according to an embodiment of the present disclosure.
FIG. 11 is a diagram illustrating an operation of a base station for an uplink transmission method for beam failure recovery according to an embodiment of the present disclosure.
FIG. 12 illustrates a block diagram of a wireless communication device according to an embodiment of the present disclosure.

[Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-R_AN(New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

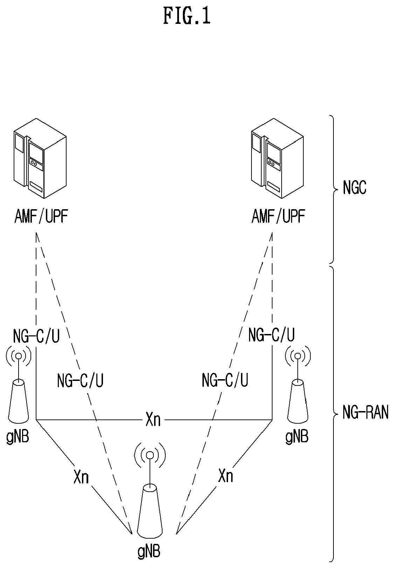

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

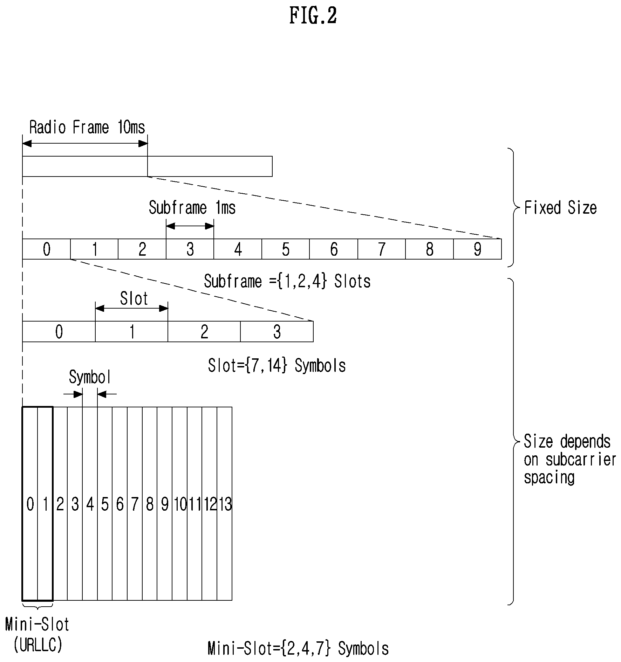

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 103$ Hz and $N_f$ is 4096. Downlink and uplink transmission is configured (organized) with a radio frame having a duration of $T_f = 1/(\Delta f_{max} N_f / 100) \cdot T_c = 10$ms. Here, a radio frame is configured with 10 subframes having a duration of $T_{sf} = (\Delta f_{max} N_f / 1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^{\mu} \in \{0, ..., N_{slot}^{subframe,\mu} - 1\}$ in a subframe and are numbered in an increasing order of $n_{s,f}^{\mu} \in \{0,..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |

(continued)

| $\mu$ | $N_{symb}^{slot}$ | $N_{slot}^{frame,\mu}$ | $N_{slot}^{subframe,\mu}$ |
|---|---|---|---|
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

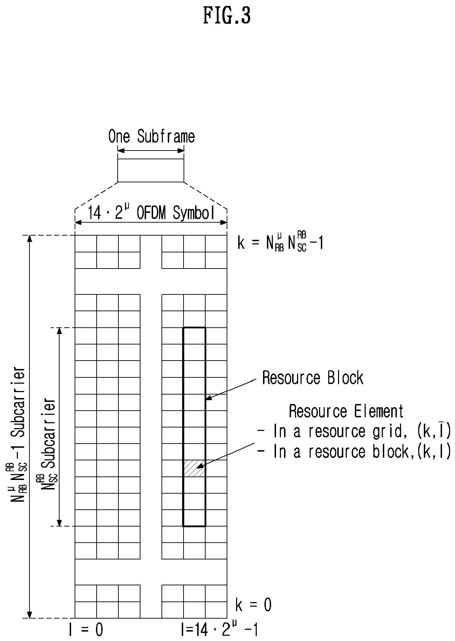

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14\cdot2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu}\leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequencyposition of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n^{\mu}_{CRB} = \left\lfloor \frac{k}{N^{RB}_{sc}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}^{start,\mu}$ is a common resource block that a BWP starts relatively to common resource block 0.

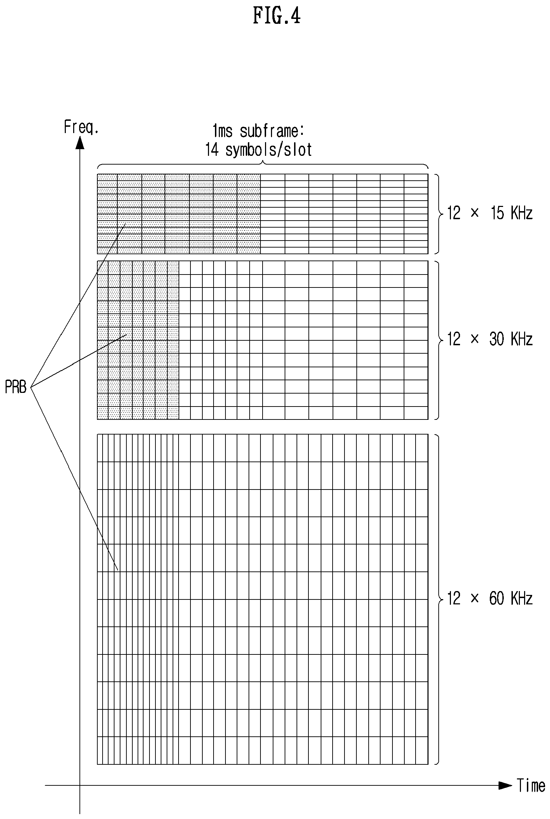

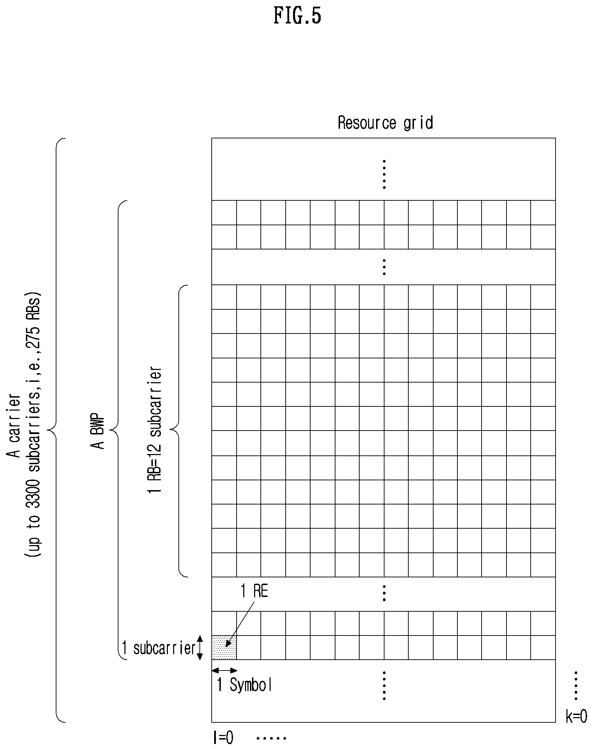

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.) . In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

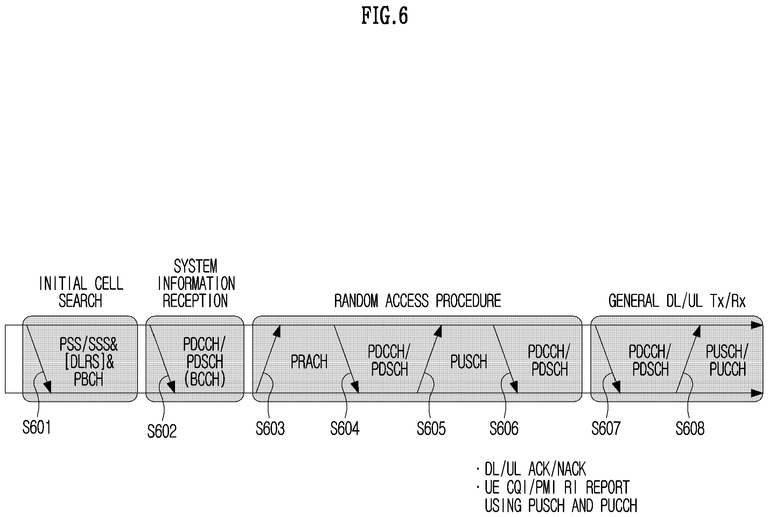

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Beam Failure Recovery

In performing a DL/UL beam management process, a beam mismatch problem may occur according to a configured beam management cycle. In particular, when a terminal moves or revolves or when a wireless channel environment is changed by the movement of a surrounding object (e.g., a beam is blocked to change a LoS (line-of sight) environment into a Non-LoS environment), the optimum DL/UL beam pair may be changed. Due to such a change, when tracking fails in a beam management process generally performed by a network indication, a beam failure event may be considered to occur. Whether such a beam failure event occurs may be determined by a terminal through reception quality of a downlink reference signal (RS). And, a reporting message for such a situation or a message for a beam recovery request (referred to as a BFRQ (beam failure recovery request) message) should be transmitted from a terminal. A base station which received such a beam failure recovery request message may perform beam recovery through a variety of processes such as beam RS transmission, beam reporting request, etc. for beam recovery. These series of beam recovery processes are referred to as beam failure recovery (BFR). A Rel-15 NR standardized a BFR (beam failure recovery) process for a primary cell (PCell) or a primary secondary cell (PScell) (the two are collectively referred to as a special cell (SpCell)) that a contention based PRACH resource always exists. As an operation in a serving cell, a corresponding BFR procedure is configured as follows with a beam failure detection (BFD) process of a terminal, a BFRQ process, and a process in which a terminal monitors a response of a base station to a BFRQ.

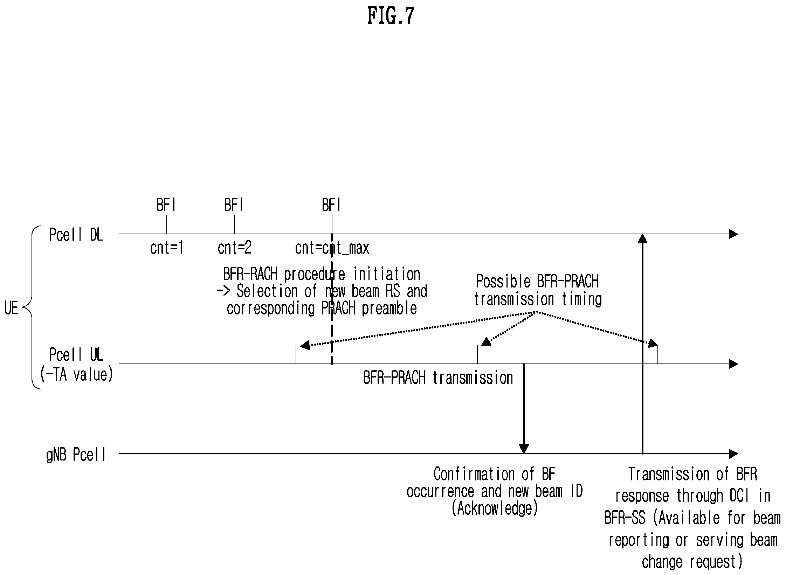

FIG. 7 is a diagram which illustrates a beam failure recovery operation for a Pcell in a wireless communication system to which the present disclosure may be applied.

Hereinafter, in reference to FIG. 7, a beam failure recovery operation is described.

1) BFD (Beam failure detection)

When all PDCCH beams fall below a predetermined quality value (Q_out), it is said that one beam failure instance occurred. Here, quality is based on a hypothetical block error rate (BLER). In other words, it means a probability of a failure in demodulation of corresponding information when it is assumed that control information was transmitted to a corresponding PDCCH.

Here, one or a plurality of search spaces for monitoring a PDCCH may be configured to a terminal. Here, a beam may be differently configured per each search space. In this case, it means a case that all PDCCH beams for all search spaces fall below a BLER threshold. As a method for a terminal to determine a BFD RS, the following two methods are supported.

An implicit configuration for BFD RS(s): a CORESET (control resource set) ID (identifier), a resource region where a PDCCH may be transmitted, is configured in each search space. And, QCLed (Quasi Co-located) RS information for a spatial RX parameter (e.g., a CSI-RS resource ID, a SSB ID) may be indicated/configured per each CORESET ID. For example, a QCLed RS is indicated/configured by a TCI (transmit configuration information) indication in a NR standard. Here, a QCLed RS for a spatial RX parameter (e.g., QCL type D in TS38.214) means that a base station informs that a terminal equally uses (or may use) a beam used to receive a corresponding spatially QCLed RS (i.e., use the same spatial domain filter for reception) in receiving a corresponding PDCCH DMRS. Finally, from a viewpoint of a base station, it is a method of informing a terminal that transmission will be performed by applying the same transmission beam or a similar transmission beam (e.g., when a beam direction is same/similar, but a beam width is different) between spatially QCLed antenna ports. In other words, as described above, a terminal may determine (i.e., consider as the 'all PDCCH beams') as a BFD RS a QCLed (Quasi Co-located) RS for a spatial RX parameter configured to a CORESET for PDCCH reception.

An explicit configuration for BFD RS(s): a base station may explicitly configure beam RS(s) to a terminal for the purpose (beam failure detection). In this case, corresponding configured beam RS(s) correspond to the 'all PDCCH beams'.

Whenever an event occurs that a hypothetical BLER measured based on BFD RS(s) deteriorates over a specific threshold, a physical layer of a terminal informs a MAC sublayer that a beam failure instance (BFI) occurred. In a MAC sublayer of a terminal, when as many BFIs as the certain number of times (e.g., a value of a higher layer parameter, beamFailureInstanceMaxCount) occur within a certain time (i.e., within a BFD timer), a beam failure is determined (considered) to occur and a relevant RACH operation is initiated.

A MAC object operates as follows:

1> If a BFI is received from a lower layer (e.g., a physical layer):

2> Start or restart a BFD timer (beamFailureDetectionTimer);
2> Increase (increment) a BFI counter (BFI_COUNTER) by 1;
2> If a BFI counter (BFI_COUNTER) is equal to or greater than the maximum count (number of times) of BFIs (beamFailureInstanceMaxCount):
3> Initiate a Random Access procedure in a SpCell (refer to the above-described Random Access related procedure).

1> If a BFD timer (beamFailureDetectionTimer) is expired; or
1> If a BFD timer (beamFailureDetectionTimer), the maximum count (number of times) of BFIs (beamFailureInstanceMaxCount), or any reference signals used for beam failure detection is reconfigured by a higher layer (e.g., a RRC layer):
2> Set a BFI counter (BFI_COUNTER) as 0.
1> If a Random Access procedure is successfully completed:

2> Set a BFI counter (BFI_COUNTER) as 0;
2> If configured, stop a beam failure recovery timer (beamFailureRecoveryTimer);

2> Consider that a Beam Failure Recovery procedure was successfully completed

2) (PRACH based) Beam Failure Recovery Request (BFRQ): New Beam Identification + PRACH Transmission

As described in 1) Beam Failure Detection (BFD), when a certain number of BFIs or more occur, a terminal may determine that a beam failure occurred and perform a beam failure recovery operation. As an example of a Beam failure recovery operation, a beam failure recovery request (BFRQ) operation based on a RACH procedure (i.e., a PRACH) may be performed. Hereinafter, a corresponding BFRQ procedure is described in detail.

A base station may configure a RS list (e.g., candidateBeamRSList) corresponding to candidate beams which may be substituted when a beam failure (BF) occurs through higher layer signaling (e.g., RRC) for a corresponding terminal. In addition, dedicated PRACH resources may be configured for corresponding candidate beams. Here, dedicated PRACH resources are non-contention based PRACH (also referred to as contention free PRACH) resources. If a terminal does not find a (proper) beam in a corresponding list, a terminal selects a contention based PRACH among preconfigured SSB resources and transmits it to a base station. A specific procedure is as follows.

Step 1) A terminal finds a beam with more than a predetermined quality value (Q_in) among RSs configured by a base station as a candidate beam RS set.

- If one beam RS exceeds a threshold, a terminal selects a corresponding beam RS.
- If a plurality of beam RSs exceeds a threshold, a terminal selects any one of corresponding beam RSs.
- If no beam exceeds a threshold, a terminal performs the following step 2.

Here, beam quality may be based on a RSRP.

In addition, a RS beam set configured by the base station may include the following three cases. For example, all beam RSs in a RS beam set may be configured with SSBs. Alternatively, all beam RSs in a RS beam set may be configured with CSI-RS resources. Alternatively, beam RSs in a RS beam set may be configured with SSBs and CSI-RS resources.

Step 2) A terminal finds a beam with more than a predetermined quality value (Q_in) or more among SSBs (associated with a contention based PRACH resource).

- If one SSB exceeds a threshold, a terminal selects a corresponding beam RS.
- If a plurality of SSBs exceeds a threshold, a terminal selects any one of corresponding beam RSs.
- If no beam exceeds a threshold, a terminal performs the following step 3.

Step 3) A terminal selects any SSB among SSBs (associated with a contention based PRACH resource).

A terminal transmits to a base station a preamble and a PRACH resource which is directly or indirectly associated and configured with a beam RS (CSI-RS or SSB) selected in the process.

- Here, a direct association configuration is used in the following case.

When a contention-free PRACH resource and a preamble are configured for a specific RS in a candidate beam RS set which is separately configured for BFR

When a preamble and a (contention based) PRACH resource mapped one-to-one with SSBs which are commonly configured for other purposes such as random access, etc. are configured

- Alternatively, here, an indirect association configuration is used in the following case.

When a contention-free PRACH resource and a preamble are not configured for a specific CSI-RS in a candidate beam RS set which is separately configured for BFR

Here, a terminal selects a preamble and a (contention free) PRACH resource associated with a SSB (i.e., QCLed (quasi-co-located) with respect to a spatial Rx parameter) designated to be receivable with the same Rx beam as a corresponding CSI-RS.

3) Monitoring of a response of a base station to a BFRQ

- A terminal monitors a response of a base station (gNB) to corresponding PRACH transmission.

Here, a response to the contention-free PRACH resource and preamble is transmitted to a PDCCH masked by a C-RNTI and a response is received in a search space (SS) which is separately configured by RRC for BFR.

Here, the search space is configured for a specific CORESET (for BFR).

For a response to a Contention PRACH, a search space and a CORESET (e.g., CORESET 0 or CORESET 1) configured for a general contention PRACH based random access process are reused as they are.

- If there is no response for a certain period of time, 2) a process of identifying and selecting a new beam, and 3) a process of monitoring a response of a base station and a BFRQ are repeated.

The process may be performed until PRACH transmission reaches the preconfigured maximum number of times (N_max) or a configured timer (BFR timer) expires.

If the timer expires, a terminal stops contention free PRACH transmission, but may perform contention based PRACH transmission by a SSB selection until N_max is reached.

Improved Beam Failure Recovery (Rel-16)

As described above, Rel-15 NR standardized a PRACH based BFR process. However, it is applied only to a PCell or a PSCell due to a technical limit that any SCell may have no UL carrier in CA (carrier aggregation) and although there is a UL carrier, a contention based PRACH may not be configured. Such a limit has a limit that especially, when a SCell is operated in a high frequency band (e.g., 30GHz) while operating a PCell in a low frequency band (e.g., below 6GHz), BFR may not be supported in a high frequency band where BFR is actually needed. For this reason, standardization for BFR support on a SCell is performed in a Rel-16 NR MIMO work item. So far, as a result of a standardization discussion, UL transmission to a corresponding SCell is impossible at least for a DL only SCell, so it is planned to configure (dedicated) PUCCH resource(s), which are used for informing a base station that SCell beam failure occurred, in a SpCell and use it to perform a BFRQ for a SCell. Hereinafter, for convenience, the PUCCH is referred to as a BFR-PUCCH.

As described above, an object of a BFR-PRACH standardized in Rel-15 is to transmit 'occurrence of beam failure + new beam RS (set) information' together to a base station. Meanwhile, an object of a BFR-PUCCH is to inform only 'occurrence of beam failure to SCell (s) '. And, to which SCell (s) beam failure occurred (e.g., CC index(es)), whether there is a new beam for corresponding SCell(s) and a corresponding beam RS ID when there is a new beam (and quality(s) (e.g., a RSRP or a SINR) of corresponding beam RS(s)) may be reported as a subsequent MAC-CE (or UCI). Here, a subsequent beam report is not necessarily triggered all the time and it is possible to deactivate SCell(s) which are BFR configured for a corresponding terminal after a base station receives a BFR-PUCCH. A reason for such a design is because dozens of SCells may be associated with one PCell/PSCell and because from a viewpoint of a base station, there may be a lot of terminals sharing one PCell/PSCell UL, and considering even such a case, it is desirable to minimize the amount of UL resources reserved for a SCell BFRQ to each terminal in a PCell/PSCell.

CORESET (control resource set) control resource set)

A CORESET Information Element (IE) is used to configure a time/frequency CORESET for searching for downlink control information.

Table 6 illustrates a CORESET IE.

【Table 6】

```
-- ASN1START
-- TAG-CONTROLRESOURCESET-START

ControlResourceSet ::=              SEQUENCE {
    controlResourceSetId            ControlResourceSetId,

    frequencyDomainResources        BIT STRING (SIZE (45)),
    duration                        INTEGER (1..maxCoReSetDuration),
    cce-REG-MappingType             CHOICE {
        interleaved                 SEQUENCE {
            reg-BundleSize              ENUMERATED {n2, n3, n6},
            interleaverSize            ENUMERATED {n2, n3, n6},
            shiftIndex                 INTEGER(0..maxNrofPhysicalResourceBlocks-1)
OPTIONAL -- Need S
        },
        nonInterleaved              NULL
    },
    precoderGranularity             ENUMERATED {sameAsREG-bundle, allContiguousRBs},
    tci-StatesPDCCH-ToAddList       SEQUENCE(SIZE (1..maxNrofTCI-StatesPDCCH)) OF TCI-
StateId OPTIONAL, -- Cond NotSIB1-initialBWP
    tci-StatesPDCCH-ToReleaseList   SEQUENCE(SIZE (1..maxNrofTCI-StatesPDCCH)) OF TCI-
StateId OPTIONAL, -- Cond NotSIB1-initialBWP
    tci-PresentInDCI                ENUMERATED {enabled}
OPTIONAL, -- Need S
    pdcch-DMRS-ScramblingID         INTEGER (0..65535)
OPTIONAL, -- Need S
    ...
}

-- TAG-CONTROLRESOURCESET-STOP
-- ASN1STOP
```

The following table 7 is a table which describes a field in a CORESET IE.

[Table 7]

| Description on a CORESET IE field |
|---|
| cce-REG-MappingType<br>Mapping of CCEs (control channel element) with REGs (resource element group) |
| controlResourceSetId<br>A value of 0 identifies a common CORESET (CORESET0, controlResourceSetZero) configured in a serving cell common configuration (ServingCellConfigCommon) or in a MIB (master information block) and is not used in this CORESET IE. A value |
| of 1 to maxNrofControlResourceSets-1 identifies CORESETs configured by dedicated signaling or SIB1 (system information block 1). controlResourceSetId is unique among BWPs of a serving cell. |
| duration<br>Consecutive time duration of a CORESET in number of symbols (duration) |
| frequencyDomainResources<br>Frequency domain resources for a CORESET. Each bit corresponds to a group of 6 RBs grouped starting from a first RB group in a BWP. A first (leftmost/most significant) bit corresponds to a first RB group in a BWP, and so on. A bit set as 1 indicates that this RB group belongs to a frequency domain resource of this CORESET. A bit corresponding to a group of RBs which are not entirely included in a BWP where a CORESET is configured is set as 0. |
| interleaverSize<br>Interleaver-Size |
| pdcch-DMRS-ScramblingID<br>Initialize PDCCH DMRS Scrambling. When this field is absent, UE applies a value of a physical cell identifier (physCellId) configured for this serving cell. |

(continued)

| Description on a CORESET IE field |
|---|
| precoderGranularity<br>Precoder granularity in a frequency domain |
| reg-BundleSize<br>Resource element groups (REG) may be bundled to generate REG bundles. This parameter defines a size of such bundles. |
| shiftIndex<br>When this field is absent, UE applies a value of a physical cell identifier (physCellId) configured for this serving cell. |
| tci-PresentInDCI<br>This field indicates whether there is a TCI (transmission configuration indicator) field in DL-related DCI. When this field is absent, UE considers TCI to be absent/disabled. For cross carrier scheduling, a network sets this field to be used for a CORESET used for cross carrier scheduling in a scheduling cell. |
| tci-StatesPDCCH-ToAddList<br>A subset of TCI states defined in a PDSCH configuration (pdsch-Config) included in a DL BWP to which a CORESET belongs and a downlink dedicated BWP (BWP-DownlinkDedicated) corresponding to a serving cell. It is used to provide a QCL relation between PDCCH DMRS ports and DL RS (s) in one RS set (TCI state). A network configures an entry of the maximum number of PDCCH TCI states (maxNrofTCI-StatesPDCCH). |
| NotSIB1-initialBWP<br>This field is a field subject to conditional presence. When SIB1 is broadcast, this field is absent in a PDCCH common configuration (PDCCH-ConfigCommon) of a first BWP in SIB1 and a serving cell common configuration (ServingCellConfigCommon). Otherwise, it is optionally present. |

A CORESET identifier (ControlResourceSetId) IE is related to a short identifier (short identity) used to identify a CORESET in a serving cell. ControlResourceSetId=0 identifies ControlResourceSet#0 configured through a PBCH (MIB) and controlResourceSetZero (serving cell common configuration (ServingCellConfigCommon)). An ID space is used in BWPs of a serving cell. The number of CORESETs per BWP is limited to 3 (including a common CORESET and a UE-specific CORESET).

Table 8 illustrates a ControlResourceSetId IE.

【Table 8】

```
-- ASN1START
-- TAG-CONTROLRESOURCESETID-START

ControlResourceSetId ::=            INTEGER (0..maxNrofControlResourceSets-1)

-- TAG-CONTROLRESOURCESETID-STOP
-- ASN1STOP
```

A CORESET zero (ControlResourceSetZero) IE is used to configure CORESET#0 of a first BWP. Table 9 illustrates a ControlResourceSetZero IE.

【Table 9】

```
-- ASN1START
-- TAG-CONTROLRESOURCESETZERO-START

ControlResourceSetZero ::=          INTEGER (0..15)

-- TAG-CONTROLRESOURCESETZERO-STOP
-- ASN1STOP
```

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

In addition, MTRP-URLLC may mean that a M TRPs transmit the same transport block(TB) by using different layer/time/frequency. A UE configured with a MTRP-URLLC transmission scheme receives an indication on multiple TCI state(s) through DCI and may assume that data received by using a QCL RS of each TCI state are the same TB. On the other hand, MTRP-eMBB may mean that M TRPs transmit different TBs by using different layer/time/frequency. A UE configured with a MTRP-eMBB transmission scheme receives an indication on multiple TCI state(s) through DCI and may assume that data received by using a QCL RS of each TCI state are different TBs. In this regard, as UE separately classifies and uses a RNTI configured for MTRP-URLLC and a RNTI configured for MTRP-eMBB, it may decide/determine whether the corresponding M-TRP transmission is URLLC transmission or eMBB transmission. In other words, when CRC masking of DCI received by UE is performed by using a RNTI configured for MTRP-URLLC, it may correspond to URLLC transmission, and when CRC masking of DCI is performed by using a RNTI configured for MTRP-eMBB, it may correspond to eMBB transmission.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex) .

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

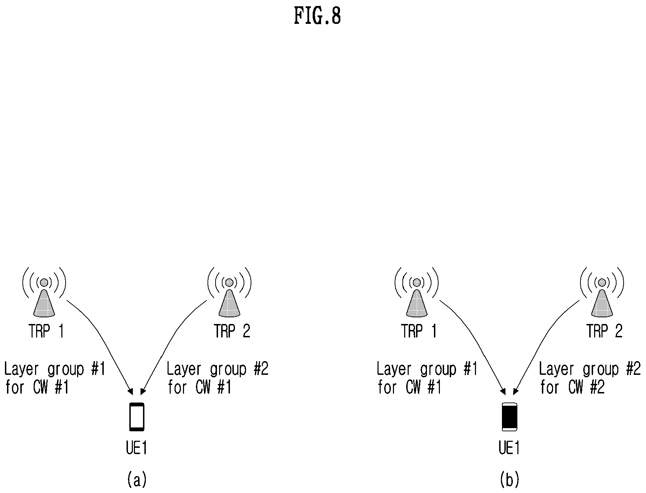

FIG. 8 illustrates a method of multiple TRPs transmission in a wireless communication system to which the present disclosure may be applied.

In reference to FIG. 8 (a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 8(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 8(b), it may have a disadvantage that a code rate corresponding to a TB is higher compared to FIG. 8 (a). However, it has an advantage that it may adjust a code rate by indicating a different RV (redundancy version) value or may adjust a modulation order of each CW for encoded bits generated from the same TB according to a channel environment.

According to methods illustrated in FIG. 8(a) and FIG. 8(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Beam failure recovery (BFR) method

The contents examined above (3GPP system, frame structure, NR system, beam failure recovery procedure (Rel-15/16), etc.) can be applied in combination with the methods proposed in the present disclosure, which will be described later, or it can be supplemented to clarify the technical features of the methods proposed in the present disclosure. The methods described below are divided for convenience of explanation, and some components of one method may be replaced with some components of another method or may be applied in combination with each other.

If a BFR operation defined in NR Rel-15/16 is applied to a multi-TRP transmission environment, when all CORESETs in which PDCCHs are transmitted in a specific TRP are in a beam failure situation and when there is a CORESET other than beam failure among the CORESETs in which PDCCHs are transmitted in the other TRP, a UE does not determine that it is a beam failure (BF) situation. To solve this problem, a TRP-specific BFR method is being discussed in standardization. In BFR considering M-TRP, it is necessary to consider both a case where BF occurs only for a specific TRP in a CC/BWP and a case where BF occurs in a corresponding CC/BWP itself (i.e., a case where BF occurs for all TRPs). In the present disclosure, particularly, a method and a UE operation for supporting TRP-specific BFR by configuring a separate BFRQ resource (PUCCH) for each TRP are proposed.

In the present disclosure, '/' means 'and', 'or', or 'and/or' depending on the context.

Among methods in which multiple TRPs/panels perform cooperative transmission to a single UE, there are two major approaches to support a method also called independent layer joint transmission (ILJT) or non-coherent joint transmission (NCJT).

One is a method in which each of a plurality of TRPs/panels transmit a PDCCH to cooperatively transmit data to a UE (multi-PDCCH based approach). The other is a method in which only one TRP/panel transmits a PDCCH, but multiple TRPs/panels/beams participate in PDSCH transmission to cooperatively transmit data (single PDCCH based approach).

When applying the multi-PDCCH based approach, each TRP/panel independently transmits DCI to a corresponding UE, so that an independent PDSCH can be scheduled.

If overlap occurs in a time/frequency domain between the corresponding PDSCHs, ILJT transmission may be supported in an overlapped region in the following form.

On a UE side, ILJT transmission may be supported in a form that some layer groups are transmitted through a specific TRP/panel, and other layer groups are transmitted through the other TRP/panel.

In other words, different TRPs/panels transmit PDCCHs in the same CC/BWP, and PDSCHs scheduled through the corresponding PDCCHs may overlap in a time/frequency domain.

In order for this operation to be supported even in a non-ideal backhaul environment where close cooperation between TRPs/panels is difficult to achieve, time/frequency resource areas in which each TRP/panel can transmit PDCCH should be separated. Therefore, in the NR system, CORESET groups through which each TRP/panel transmits a PDCCH can be separated.

If a beamforming technique is applied to each PDCCH transmission, beams for different CORESETs within each CORESET group may be configured/indicated differently. The beam may mean at least one of a TCI state, a source/QCL RS (e.g., CSI-RS / SSB), a spatial Tx filter, or a spatial Tx parameter.

In the above case, an operation based on characteristics related to a CORESET group may be configured.

As a characteristic related to the CORESET group, a Type-D QCL RS (e.g., spatial relation related RS (e.g., CSI-RS/SSB)) indicated in a TCI state of a CORESET may be different, but it can be considered that CORESETs belonging to the same CORESET group are transmitted in the same TRP/panel. Based on this, operations related to HARQ, UCI reporting handling, PUCCH/PUSCH collision handling, PDSCH rate matching, power control, etc. can be configured to be managed/performed per CORESET group.

If the existing beam failure recovery operation (BFR operation defined in NR Rel-15) is applied to the above-described multi-PDCCH based NCJT environment, the following problems may occur.

If all CORESETs belonging to a specific TRP are in a beam failure situation, but there is a CORESET that is not a beam failure among CORESETs belonging to the other TRP, a UE does not determine that it is a beam failure (BF) situation. Here, the all beam failed TRP may be a TRP (e.g., Primary TRP) responsible for transmitting important control information (e.g., SIB, RA, Paging). Even if (a specific beam of) the other TRP (e.g., Secondary TRP) is in a non-BF situation, a problem occurs in which a corresponding UE cannot receive important control information.

To solve this problem, discussions were underway to introduce a standard for TRP-specific BFR (see Table 10 below for Rel-17 standardization discussion).

Table 10 below shows agreements related to TRP-specific beam failure recovery (TRP-specific BFR). The embodiment (Proposal 1) of the present disclosure described later can be applied to UE/base station operation (e.g., configuration information related to beam failure recovery, BFRQ transmission, BFR MAC-CE transmission, etc.) in combination with all or part of the agreements according to Table 10 below.

[Table 10]

| @RAN1 #102e |
|---|
| Agreement<br>• Evaluate enhancement to enable per-TRP based beam failure recovery starting with Rel-15/16 BFR as the baseline. |

(continued)

| |
|---|
| **@RAN1 #102e**<br>Agreement<br> • Consider following potential enhancement aspects to enable per-TRP based beam failure recovery<br>     ◦ Issue 1: TRP-specific BFD<br>     ◦ Issue 2: TRP-specific new candidate beam identification<br>     ◦ Issue 3: TRP-specific BFRQ<br>     ◦ Issue 4: gNB response enhancement<br>     ◦ Issue 5: UE behavior on QCL/spatial relation assumption/UL power control for DL and UL channels/RSs after receiving gNB response |
| **@RAN1 #103e**<br>Agreement<br> • For M-TRP beam failure detection, support independent BFD-RS configuration per-TRP, where each TRP is associated with a BFD-RS set.<br>     ◦ FFS: The number of BFD RSs per BFD-RS set, the number of BFD-RS sets, and number of BFD RSs across all BFD-RS sets per DL BWP<br>     ◦ Support at least one of explicit and implicit BFD-RS configuration<br>             ▪ With explicit BFD-RS configuration, each BFD-RS set is explicitly configured<br>                     • FFS: Further study QCL relationship between BFD-RS and CORESET<br>             ▪ FFS: How to determine implicit BFD-RS configuration, if supported<br> • For M-TRP new beam identification<br>     ◦ Support independent configuration of new beam identification RS (NBI-RS) set per TRP if NBI-RS set per TRP is configured<br>             ▪ FFS: detail on association of BFD-RS and NBI-RS<br>             ▪ Support the same new beam identification and configuration criteria as Rel.16, including L1-RSRP, threshold |
| Agreement<br>Support TRP-specific BFD counter and timer in the MAC procedure<br> • The term TRP is used only for the purposes of discussions in RANI and whether/how to capture this is FFS |
| Agreement<br> • Support a BFRQ framework based on Rel.16 SCell BFR BFRQ<br>     ◦ In RAN1#104-e, select one from the following options<br>             ▪ Option 1: Up to one dedicated PUCCH-SR resource in a cell group<br>                     • A cell group refers to either MCG, SCG, or PUCCH cell group<br>                     • FFS: number of spatial filters associated with the PUCCH-SR resources<br>                     • FFS: How the SR configuration is done<br>             ▪ Option 2: Up to two (or more) dedicated PUCCH-SR resources in a cell group<br>                     • A cell group refers to either MCG, SCG, or PUCCH cell group<br>                     • FFS: whether each PUCCH-SR resource is restricted to be associated to one spatial filter<br>                     • FFS: How the SR configuration is done<br>     ◦ FFS: Whether no dedicated PUCCH-SR resource can be supported in addition to Option 1 or Option 2<br> • Study whether and how to provide the following information in BFRQ MAC-CE<br>     ◦ Index information of failed TRP(s) |

(continued)

| Agreement |
|---|
| ◦ CC index (if applicable)<br>◦ New candidate beam index (if found)<br>◦                 Indication whether          new beam(s) is found<br>◦ FFS: whether/how to incorporate multi-TRP failure |

In summary, it was agreed to support TRP-specific BFR by enhancing Rel-16 PUCCH-based BFR. Based on this, the following operations can be defined/configured.

A beam failure detection RS set (BFD-RS set) for beam failure monitoring/detection may be configured to be TRP specific. That is, a specific BFD-RS set may explicitly/implicitly indicate a specific TRP. Hereinafter, in this specification, a TRP may be interpreted to mean a BFD-RS set, and conversely, a BFD-RS set may be interpreted to mean a TRP. As an example, a PUCCH resource related to a specific TRP may be interpreted as a PUCCH resource related to a specific BFD-RS set.

An NBI-RS set that configures candidate beams for a new beam identification may be configured TRP-specific. As an example, an NBI-RS set corresponding to a BFD-RS set may be configured. As an example, an NBI-RS set associated with each BFD-RS set may be configured.

In addition, when a TRP-specific BFR is declared, a PUCCH resource through which a UE informs a base station of BFR may be based on a single PUCCH resource (e.g., up to single PUCCH resource within a cell group) or a plurality of PUCCH resources (e.g., up to two PUCCH resources within a cell group).

Both methods have their pros and cons. The up to single PUCCH resource method has an advantage of saving SR PUCCH resources. On the other hand, the up to two PUCCH resource method has an advantage of informing a base station which TRP is in a beam failure (BF) situation through PUCCH transmission. Specifically, an SR PUCCH (resource) corresponding to each TRP is configured, and a TRP in a beam failure (BF) situation can be determined based on a PUCCH (resource) used in a BFR declaration (BFRQ transmission).

However, currently M-TRP transmission can be performed in both PCell (or SpCell) and SCell. Accordingly, the following situations can be assumed with respect to BF that occurs for each TRP.

First Cell (e.g., Cell #1): TRP 1 (BF O), TRP 2 (BF X)
Second Cell (e.g., Cell #2): TRP 1 (BF X), TRP 2 (BF O)
Third cell (e.g., Cell #3): TRP 1 (BF O), TRP 2 (BF O)

As described above, if a TRP (e.g., BFD-RS set) where BF occurs for each cell is different, the following problems may occur.

In terms of a UE operation, ambiguity may arise as to which of the two PUCCH resources should be used for BFR (BFRQ transmission).

In the present disclosure, a method and a UE operation for supporting TRP-specific BFR to solve the above problem are proposed. In the present disclosure, "occurrence of beam failure (BF)" may mean that BF is detected based on measurement of a BFD-RS set configured for detecting beam failure.

[Proposal 1]

Hereinafter, when X (SR) PUCCH resources are configured in a cell group for a Beam Failure Recovery reQuest (BFRQ), a method for transmitting a TRP specific BFRQ (TRP specific BFRQ) is described.

A UE may transmit a BFR PUCCH according to a number of dedicated (SR) PUCCH resources for BFRQ purposes configured in an SpCell within a cell group. Specifically, a UE may transmit a BFR PUCCH based on at least one of Embodiments i) to ii) below. The SpCell may refer to a special cell defined for a cell group. The SpCell may include a Primary Cell (PCell) for a Master Cell Group (MCG) and/or a Primary Secondary Cell (PSCell) for a Secondary Cell Group (SCG).

Embodiment i)

It can be assumed that there is one dedicated (SR) PUCCH resource for (TRP-specific) BFRQ use configured in an SpCell within a specific cell group. A UE/base station may operate based on at least one of the following i-1) or i-2).

i-1)

It can be assumed that S-TRP transmission is performed in the SpCell (for a specific BWP). For example, only one control resource set pool (CORESET pool) or only one beam failure detection RS set/group (BED RS set/group) may be configured in a corresponding SpCell. Here, a UE/base station may operate based on at least one of the following a) or b).

a) Beam Failure (BF) may occur in the SpCell. Specifically, it may be determined that all BFD RSs in a specific BWP within the SpCell are failures. In this case, a UE can request BFR (i.e., transmit a BFRQ) to a base station through the Rel-15-based PRACH-based BFR procedure. Afterwards, subsequent operations between a base station and a UE (gNB response and UE behavior regarding DL/UL beam update) may be performed.

Unlike Rel-15 BFR operation, a BFR MAC-CE may be transmitted to a base station (via Msg3/5). The corresponding BFR MAC-CE message may include information on a failed TRP (i.e., TRP in which BF was detected) for each cell. A BFD-RS set can be configured specifically for a TRP, and information on the TRP where the BF was detected can be interpreted as information on a BFD-RS set where the BF was detected.

b) BF does not occur in the SpCell, and (TRP-specific) BF may occur in SCell(s) within a cell group other than the SpCell. In this case, a UE may request BFR (i.e., transmit a BFRQ) to a base station using one dedicated (SR) PUCCH resource preconfigured for BFRQ purposes. Afterwards, subsequent operations between a base station and a UE (based on the PUCCH-based BFR procedure) may be performed. Specifically, the following operations 1) to 3) may be performed.

1) PUSCH scheduling based on gNB response (e.g., DCI)
2) BFRQ MAC CE transmission on a PUSCH (indicating that a specific TRP (specific BFD-RS set) (or specific CORESET pool index/specific CORESET group) in the SCell is in a BF situation)
3) DL/UL beam update

When a UE transmits a BFRQ MAC CE, the message may include information on a failed TRP (i.e., a TRP in which BF was detected) for each cell.
A combination of the a) operation and the b) operation may be applied to a UE/base station operation.

i-2)

It can be assumed that M-TRP transmission is performed (for a specific BWP) in the SpCell. As an example, multiple CORESET pools or multiple beam failure detection RS sets/groups (BED RS set/groups) may be configured in a corresponding SpCell. Here, a UE/base station may operate based on at least one of the following a) or b).
a) BF may occur only in some TRPs in the SpCell. Specifically, in a specific BWP within the SpCell, all BFD RSs within a specific BFD-RS set may be determined to be failures. In this case, a UE may request BFR (i.e., transmit a BFRQ) to a base station using one dedicated (SR) PUCCH resource preconfigured for BFRQ purposes. Afterwards, subsequent operations between a base station and a UE (based on the PUCCH-based BFR procedure) (see 1) to 3) of i-1) b) above) may be performed. When transmitting a UE's BFR MAC CE, a corresponding message may include information on a failed TRP (i.e., a TRP in which a BF was detected) for each cell.
On the other hand, BF may occur for all TRPs in the SpCell. Specifically, it may be determined that all BFD RSs for all BFD RS sets in a specific BWP within the SpCell are failures. In this case, a UE can request BFR (i.e., transmit a BFRQ) to a base station through the Rel-15-based PRACH-based BFR procedure. Afterwards, subsequent operations between a base station and a UE (gNB response and UE behavior regarding DL/UL beam update) may be performed.
Unlike the Rel-15 BFR operation, a BFR MAC-CE may be transmitted to a base station (via Msg3/5). The corresponding BFR MAC-CE message may include information on a failed TRP (i.e., TRP in which BF was detected) for each cell.
b) BF does not occur in all TRPs of the SpCell, and BF may occur in a specific TRP (e.g., TRP-specific BF) and/or in all TRPs (e.g., cell-specific BF) in SCell(s) within a cell group other than the SpCell. In the above case, TRP-specific beam failure recovery (TRP-specific BFR) and/or tpf specific beam failure recovery (cell-specific BFR) operations may be performed.
Specifically, a UE may request BFR (i.e., transmit a BFRQ) to a base station using one dedicated (SR) PUCCH resource preconfigured for BFRQ purposes. Afterwards, subsequent operations between a base station and a UE (based on the PUCCH-based BFR procedure) (see 1) to 3) of i-1) b) above) may be performed.
From an implementation perspective, a combination of the operation a and the operation b may be applied to a UE/base station operation.

Embodiment ii)

It may be assumed that there are two or more dedicated (SR) PUCCH resources for (TRP-specific) BFRQ use in an SpCell within a specific cell group.

Among the plurality of dedicated (SR) PUCCH resources configured for the BFRQ purpose, a specific PUCCH resource may be connected/mapped/associated with at least one of the following 1), 2) or 3) (for each CC / BWP).

1) Specific TRP (e.g., specific beam failure detection RS set (specific BFD-RS set))
2) Specific control resource set pool index (specific CORESETPoolIndex)
3) Subset of all control resource sets within a bandwidth part (BWP) (and/or CORESET group index)

A UE/base station may operate based on at least one of the following ii-1) or ii-2).

ii-1)

It may be assumed that S-TRP transmission is performed (for a specific BWP) in the SpCell. For example, only one control resource set pool (CORESET pool) or only one beam failure detection RS set/group (BED RS set/group) may be configured in the corresponding SpCell. Here, a UE/base station may operate based on at least one of the following a) or b).

a) BF (Beam Failure) may occur in the SpCell. Specifically, it may be determined that all BFD RSs in a specific BWP within the SpCell are failures. In this case, a UE can request BFR (i.e., transmit a BFRQ) to a base station through the Rel-15-based PRACH-based BFR procedure. Afterwards, subsequent operations between a base station and a UE (gNB response and UE behavior regarding DL/UL beam update) may be performed.

Unlike Rel-15 BFR operation, a BFR MAC-CE may be transmitted to a base station (via Msg3/5). A corresponding BFR MAC-CE message may include information on a failed TRP (i.e., TRP in which BF was detected) for each cell.

b) BF does not occur in the SpCell, and TRP-specific BF and/or all TRP BF (or cell-specific BF) may occur in SCells within a cell group other than the SpCell. A UE may operate based on at least one of Example 1) or Example 2) below to determine a PUCCH resource for requesting BFR (i.e., PUCCH resource for BFRQ transmission).

Example 1) It can be assumed that BF occurs in a single SCell, and the BF occurs in a specific TRP within an SCell where a BFR procedure is triggered.

A UE may transmit a BFRQ to a base station through a PUCCH resource related to a corresponding TRP (or a TRP in which BF has not occurred) among two PUCCH resources (configured in SpCell).

As an example, a UE may request BFR (i.e., transmit a BFRQ) to a base station through a PUCCH resource of an SpCell associated with a specific CORESETPoolIndex (and/or CORESET group index). The specific CORESETPoolIndex (and/or CORESET group index) may be related to the specific TRP.

As an example, a UE may transmit BFRQ to a base station through a PUCCH resource associated with a BFD-RS configured in which beam failure was detected.

Afterwards, subsequent operations between a base station and a UE (based on the PUCCH-based BFR procedure) (see 1) to 3) of i-1) b) above) may be performed. When a UE transmit a BFR MAC CE, the message may not include information on a failed TRP (i.e., a TRP in which BF was detected) for each cell.

On the other hand, it can be assumed that BF occurs in a single SCell and that BF occurs in all TRPs within the SCell where a BFR procedure is triggered. In this case, a UE can request BFR (i.e., transmit BFRQ) to a base station by using one of two PUCCH resources (configured in an SpCell) or by using a PUCCH resource selected according to a specific rule.

As an example, the PUCCH resource selected according to the specific rule may be defined based on at least one of the following examples.

'PUCCH of lowest index'
PUCCH in which 'PUCCH-spatialRelationInfo of lowest index' is configured/activated
PUCCH in which 'TCI-state of lowest index' is configured/activated/indicate

After a UE transmits a BFRQ, subsequent operations between a base station and a UE (based on the PUCCH-based BFR procedure) (see 1) to 3) of i-1) b) above) may be performed. When a UE transmits a BFR MAC CE, the message may include information on a failed TRP (i.e., a TRP in which BF was detected) for each cell. Or/and a PUCCH resource pre-defined by a base station configuration may exist in the corresponding message. For example, a base station may configure a primary PUCCH resource among a plurality of dedicated (SR) PUCCH resources.

Example 2) It can be assumed that BF occurs in a plurality of SCells, and the BF occurs in a specific TRP within the SCell(s) where a BFR procedure is triggered.

A UE may transmit a BFRQ to a base station through a PUCCH resource related to the TRP (or the TRP in which BF has not occurred) among two PUCCH resources (configured in SpCell).

As an example, a UE may request BFR (i.e., transmit a BFRQ) to a base station through a PUCCH resource of an SpCell associated with a specific CORESETPoolIndex (and/or CORESET group index). The specific CORESETPoolIndex (and/or CORESET group index) may be related to the specific TRP.

As an example, a UE may transmit a BFRQ to a base station through a PUCCH resource associated with a BFD-RS set in which beam failure was detected.

Afterwards, subsequent operations between a base station and a UE (based on the PUCCH-based BFR procedure) (see 1) to 3) of i-1) b) above) may be performed. When a UE transmits a BFR MAC CE, the message may not include information on a failed TRP (i.e., the TRP in which a BF was detected) for each cell.

On the other hand, it can be assumed that BF occurs in a plurality of SCells, and failed TRPs (i.e., TRP in which BF is detected) are different for each SCell in the SCell(s) in which a BFR procedure is triggered (example: both-TRP (TRP 1/2) fails in SCell #1, TRP 1 fails in SCell #2, and TRP 2 fails in SCell #3).

Among the corresponding SCell(s), a UE may request BFR (i.e., transmit a BFRQ) to a base station using a PUCCH resource related to a TRP determined based on the number of beam failure detections or a PUCCH resource selected according to a specific rule.

The TRP determined based on the number of beam failure detections may mean a TRP in which beam failure is detected a higher number of times (i.e., TRP with the highest number of beam failure detections) or a TRP in which beam failure is detected a smaller number of times (i.e., TRP with the smallest number of beam failure detections).

As an example, the PUCCH resource related to the TRP determined based on the number of beam failure detections may be a PUCCH resource of an SpCell associated with a specific CORESETPoolIndex (and/or CORESET group index). The specific CORESETPoolIndex (and/or CORESET group index) may be related to the determined TRP.

As an example, the PUCCH resource selected according to the specific rule may be defined based on at least one of the following examples.

'PUCCH of lowest index'
PUCCH in which 'PUCCH-spatialRelationInfo of lowest index' is configured/activated
PUCCH in which 'TCI-state of lowest index' is configured/activated/indicated

After a UE transmits a BFRQ, subsequent operations between a base station and a UE (based on the PUCCH-based BFR procedure) (see 1) to 3) of i-1) b) above) may be performed. When a UE transmits a BFR MAC CE, the message may include information on a failed TRP (i.e., TRP in which BF was detected) for each cell. Or/and a pre-defined PUCCH resource may exist depending on a base station configuration. For example, a base station may configure a primary PUCCH resource among a plurality of dedicated (SR) PUCCH resources.

A combination of the a) operation and the b) operation may be applied to a UE/base station operation.

ii-2)

It can be assumed that M-TRP transmission is performed (for a specific BWP) in the SpCell. As an example, multiple CORESET pools or multiple beam failure detection RS sets/groups (BED RS set/groups) may be configured in the corresponding SpCell. Here, a UE/base station may operate based on at least one of the following a), b), or c).

a) BF may occur for all TRPs in the SpCell. Specifically, it may be determined that all BFD RSs for all BFD RS sets in a specific BWP within the SpCell are failures. In this case, a UE can request BFR (i.e., transmit a BFRQ) to a base station through the Rel-15-based PRACH-based BFR procedure. Afterwards, subsequent operations between a base station and a UE (gNB response and UE behavior regarding DL/UL beam update) may be performed.

Unlike Rel-15 BFR operation, a BFR MAC-CE may be transmitted to a base station (via Msg3/5). The corresponding BFR MAC-CE message may include information on a failed TRP (i.e., TRP in which BF was detected) for each cell. As an example, the information on the failed TRP (i.e., TRP in which BF was detected) for each cell may mean information on a BFD-RS set in which BF was detected among a plurality of BFD-RS sets for each cell.

b) TRP-specific BF may occur in the SpCell, and additionally, TRP-specific BF and/or all TRP BF (or cell-specific BF) may occur in a SCell within a cell group other than the SpCell. A UE may operate as follows to determine a PUCCH resource for requesting BFR (i.e., PUCCH resource for BFRQ transmission).

Example 1) It can be assumed that BF occurs at a specific TRP in an SpCell where a BFR procedure is triggered. A UE can transmit a BFRQ to a base station through a PUCCH resource related to a TRP (or TRP in which BF has not occurred) among two PUCCH resources (configured in SpCell).

As an example, a UE may request BFR (i.e., transmit a BFRQ) to a base station through a PUCCH resource of an SpCell associated with a specific CORESETPoolIndex (and/or CORESET group index). The specific CORESETPoolIndex (and/or CORESET group index) may be related to the specific TRP.

As an example, a UE may transmit a BFRQ to a base station through a PUCCH resource associated with a BFD-RS set in which beam failure was detected.

Afterwards, subsequent operations between a base station and a UE (based on the PUCCH-based BFR procedure) (see 1) to 3) of i-1) b) above) may be performed. When a UE transmits a BFR MAC CE, the message may not include information on a failed TRP (i.e., TRP in which a BF was detected) for each cell.

c) BF does not occur in the SpCell, and TRP-specific BF and/or all TRP BF (or cell-specific BF) may occur in SCells within a cell group other than the SpCell. A UE may operate based on at least one of Example 1) or Example 2) below to determine a PUCCH resource for requesting BFR (i.e., PUCCH resource for BFRQ transmission).

Example 1) It can be assumed that BF occurs in a single SCell, and the BF occurs in a specific TRP within an SCell where a BFR procedure is triggered.

A UE may transmit a BFRQ to a base station through a PUCCH resource related to a TRP (or TRP in which BF has not occurred) among two PUCCH resources (configured in SpCell).

As an example, a UE may request BFR (i.e., transmit a BFRQ) to a base station through a PUCCH resource of an SpCell associated with a specific CORESETPoolIndex (and/or CORESET group index). The specific CORESETPoolIndex (and/or CORESET group index) may be related to the specific TRP.

As an example, a UE may transmit a BFRQ to a base station through a PUCCH resource associated with a BFD-RS set in which beam failure was detected.

Afterwards, subsequent operations between a base station and a UE (based on the PUCCH-based BFR procedure) (see 1) to 3) of i-1) b) above) may be performed. When a UE transmits a BFR MAC CE, the message may not include information on a failed TRP (i.e., TRP in which a BF was detected) for each cell.

On the other hand, it can be assumed that BF occurs in a single SCell and that BF occurs in all TRPs within the SCell where a BFR procedure is triggered. In this case, a UE can request BFR (i.e., transmit BFRQ) to a base station by using one of two PUCCH resources (configured in SpCell) or by using a PUCCH resource selected according to a specific rule.

As an example, the PUCCH resource selected according to the specific rule may be defined based on at least one of the following examples.

'PUCCH of lowest index'
PUCCH in which 'PUCCH-spatialRelationInfo of lowest index' is configured/activated
PUCCH in which 'TCI-state of lowest index' is configured/activated/indicated

After a UE transmits a BFRQ, subsequent operations between a base station and a UE (based on the PUCCH-based BFR procedure) (see 1) to 3) of i-1) b) above) may be performed. When a UE transmits a BFR MAC CE, the message may include information on a failed TRP (i.e., TRP in which a BF was detected) for each cell. Or/and a PUCCH resource pre-defined by a base station configuration may exist in the corresponding message. For example, a base station may configure a primary PUCCH resource among a plurality of dedicated (SR) PUCCH resources.

Example 2) It can be assumed that BF occurs in a plurality of SCells, and the BF occurs in a specific TRP within SCell(s) where a BFR procedure is triggered.

A UE may transmit a BFRQ to a base station through a PUCCH resource related to a TRP (or TRP in which BF has not occurred) among two PUCCH resources (configured in SpCell).

As an example, a UE may request BFR (i.e., transmit a BFRQ) to a base station through a PUCCH resource of SpCell associated with a specific CORESETPoolIndex (and/or CORESET group index). The specific CORESETPoolIndex (and/or CORESET group index) may be related to the specific TRP.

As an example, a UE may transmit a BFRQ to a base station through a PUCCH resource associated with a BFD-RS set in which beam failure was detected.

Afterwards, subsequent operations between a base station and a UE (based on the PUCCH-based BFR procedure) (see 1) to 3) of i-1) b) above) may be performed. When a UE transmits a BFR MAC CE, the message may not include information on a failed TRP (i.e., the TRP in which a BF was detected) for each cell.

On the other hand, it can be assumed that BF occurs in a plurality of SCells, and failed TRPs (i.e., TRP in which BF is detected) are different for each SCell in the SCell(s) in which a BFR procedure is triggered (example: both-TRP (TRP 1/2) fails in SCell #1, TRP 1 fails in SCell #2, and TRP 2 fails in SCell #3).

Among corresponding SCell(s), a UE may request BFR (i.e. transmit a BFRQ) to a base station using a PUCCH resource related to a TRP determined based on the number of beam failure detections or a PUCCH resource selected according to a specific rule.

The TRP determined based on the number of beam failure detections may mean a TRP in which beam failure is detected a higher number of times (i.e., TRP with the highest number of beam failure detections) or a TRP in which beam failure is detected a smaller number of times (i.e., TRP with the smallest number of beam failure detections).

As an example, the PUCCH resource related to the TRP determined based on the number of beam failure detections may be a PUCCH resource of an SpCell associated with a specific CORESETPoolIndex (and/or CORESET group index). The specific CORESETPoolIndex (and/or CORESET group index) may be related to the determined TRP.

As an example, the PUCCH resource selected according to the specific rule may be defined based on at least one of the following examples.

'PUCCH of lowest index'
PUCCH in which 'PUCCH-spatialRelationInfo of lowest index' is configured/activated
PUCCH in which 'TCI-state of lowest index' is configured/activated/indicated

After a UE transmits a BFRQ, subsequent operations between a base station and a UE (based on the PUCCH-based BFR procedure) (see 1) to 3) of i-1) b) above) may be performed. When a UE transmits a BFR MAC CE, the message may include information on a failed TRP (i.e., TRP in which BF was detected) for each cell. Or/and a pre-defined PUCCH resource may exist depending on a base station configuration. For example, a base station may configure a primary PUCCH resource among a plurality of dedicated (SR) PUCCH resources.

A combination based on two or more of the a) operation, the b) operation and the c) operation may be applied to a UE/base station operation.

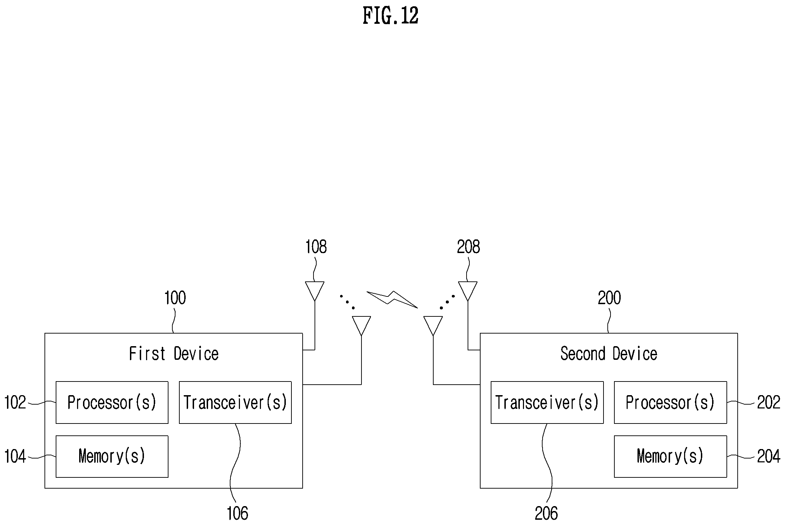

In terms of implementation, operations of a base station/UE according to the above-described Embodiments (e.g., operations related to beam failure recovery based on at least one of proposal 1 / i-1 of Embodiment i / i-2 of Embodiment i / ii-1 of Embodiment ii / ii-2 of Embodiment ii) may be processed by the device of FIG. 12 (e.g., processors 102 and 202 of FIG. 12), which will be described later.

In addition, operations of a base station/UE according to the above-described Embodiment may be stored in a memory (e.g., 104, 204 in FIG. 12) in a form of instructions/programs (e.g., instruction, executable code) for driving at least one processor (e.g., 102, 202 in FIG. 12).

In addition to the discussion described above, discussions are currently underway in standardization as to whether Rel-15 (PRACH-based BFR for a special cell (SpCell) (This includes a primary cell (PCell) and a primary secondary cell (PSCell))) /Rel-16 BFR (PUCCH-based BFR for a secondary cell (SCell)) operation and Rel-17 M-TRP BFR operation can coexist. Rel-15 BFR covers only an SpCell in monitoring/detection of beam failure (BF), and Rel-16 BFR covers only a SCell, on the other hands, since M-TRP operation is possible in both an SpCell and an SCell, Rel-17 M-TRP BFR can be a BFR operation that basically covers both an SpCell and a SCell. In addition, even if an M-TRP operation is performed on a specific cell and an S-TRP operation is performed on another cell, it has an advantage of being able to perform both M-TRP BF and S-TRP BF through Rel-17 M-TRP BFR. However, if a beam environment is not good enough to cause Rel-15 BF in an SpCell, because Rel-17 BFR transmits a beam failure recovery request (BFRQ) to a base station based on a PUCCH, there may be deterioration in robustness compared to a PRACH. That is, in a PsCell, coexistence of Rel-15 PRACH based BFR and Rel-17 M-TRP BFR can be advantageous in terms of reliability between a base station and a UE. In this disclosure, a method for coexisting Rel-15/16 BFR (this is referred to as cell-specific BFR) and Rel-17 (M-TRP) BFR and a subsequent UE/base station operation are proposed.

In the present disclosure, '/' can be interpreted as 'and', 'or', or 'and/or' depending on the context.

Embodiment 1: In order for Rel-16 (cell-specific) BFR and Rel-17 (M-TRP) BFR to coexist, the following method is proposed.

According to this embodiment, a UE may not expect a base station to perform both Rel-16 (cell-specific) BFR configuration and Rel-17 (M-TRP) BFR configuration for a specific Scell or cell group. That is, a UE can expect a base station to perform only Rel-16 (cell-specific) BFR configuration or only Rel-17 (M-TRP) BFR configuration for a specific Scell or cell group.

If only Rel-16 (cell-specific) BFR configuration is performed for a UE for a specific Scell or cell group, only one dedicated PUCCH-SR resource (i.e., it can be configured by an applicable scheduling request configuration (resource) for BFR, e.g., schedulingRequestID-BFR-SCell) for a BFRQ can be configured per cell group. If only Rel-17 (M-TRP) BFR configuration is performed for a UE for a specific Scell or cell group, up to two dedicated PUCCH-SR resources for a BFRQ can be configured per cell group.

Through the above UE operation, it is possible to prevent PUCCH-SR resources for BFRQ transmission from increasing. In the case of Rel-16 BFR, one dedicated PUCCH-SR resource in a cell group is required for cell-specific BFR operation, but in Rel-17 BFR, up to two dedicated PUCCH-SR resources in a cell group are required for TRP-specific BFR operation. If Rel-16 BFR and Rel-17 BFR configurations are performed on a UE at the same time for a specific cell (or cell group), limited PUCCH-SR resources are further wasted, which also affects an operation of the existing scheduling request.

In addition, in an enhanced (Rel-17) UE, even if only the Rel-17 M-TRP BFR configuration corresponding to the enhanced BFR operation is performed, depending on whether an M-TRP operation or an S-TRP operation is performed on a specific cell, a TRP-specific BFR and a cell-specific (S-TRP) BFR can be performed for each cell (or cell group). That is, when performing BFR MAC-CE transmission (via the corresponding PUSCH) by PUSCH scheduling of the base station after transmission of the terminal's PUCCH, That is, when performing BFR MAC-CE transmission (via the corresponding PUSCH) by PUSCH scheduling of a base station after transmission of a UE's PUCCH, based on whether it is an M-TRP operation corresponding to each cell (or cell group) and/or beam failure status, as contents of the MAC-CE, cell-specific BF information (a cell fails)/TRP-specific BF information (a specific TRP or all TRPs fail within a cell) for each cell (or cell group) can be loaded and transmitted on the MAC-CE for each cell (or cell group).

Embodiment 2: In order for Rel-15/Rel-16 (cell-specific) BFR and Rel-17 (M-TRP) BFR to coexist, the following method is proposed.

A base station can configure both a cell-specific BFR configuration and a Rel-17 (M-TRP) BFR configuration for a specific cell (or cell group) to a UE.

According to the standards to date, when determining an implicit beam failure detection (BFD) reference signal (RS: reference signal), if the number of CORESETs with different TCIs (e.g., QCL RSs for different spatial RX parameters, i.e., QCL type-D RS is configured) in a CC/BWP exceeds 2, a UE randomly selects one CORESET and determines a BFD RS with a QCL type-D RS configured in the selected CORESET. Depending on how a UE determines a (implicit) BFD RS and a (implicit) BFD RS corresponding to an M-TRP BFR (or how a base station configures an explicit BFD RS), cell-specific BF occurs but M-TRP BF does not occur in some situations, or conversely, BF occurs in all TRPs among M-TRPs but no cell-specific BF occurs in some situations. In other words, depending on a situation, mismatch between cell-specific BF and M-TRP BF may occur.

For example, it is assumed that, in a specific component carrier (CC) (or cell)/BWP, CORESET 0 and 1 belong to CORESET pool (or CORESET group) 1, and CORESET 2 and 3 belong to CORESET pool (or CORESET group) 2. Here, each CORESET pool (or CORESET group) may correspond to each different TRP.

Issue 1: It is assumed that a UE determines a (implicit) BFD RS corresponding to a cell-specific BFR configuration to be a beam of CORESET 0 and 1 (QCL type-D RS) and beam failure of the configured COSESET 0 and 1 has been detected/determined. It may be sufficient for a UE to declare BF (i.e., perform PUCCH-based TRP-specific BFRQ) only for a TRP corresponding to CORESET pool (group) 1. However, a UE may have problems detecting/determining beam failure in the corresponding cell and performing cell-specific BFRQ (e.g., for Spcell, a PRACH-BFR (i.e., PRACH resource dedicated to BFR) trigger).

Solution 1 for Issue 1: When a cell-specific BFR and an M-TRP BFR are configured together in a specific cell (or CC) /BWP (and if explicit BFD RS is not configured in each BFR configuration), a UE can configure cell-specific BFD RSs as a super set (union) of BFD RSs performed for M-TRP BFR configurations. That is, for the cell (or CC)/BWP, a UE may determine a TRP-specific BFD RS with a QCL type-D RS of CORESET (s) belonging to a CORESET pool (or group) corresponding to each TRP, and may configured cell-specific BFD RSs as a union of the TRP-specific BFD RSs for each TRP.

If an explicit BFD RS is configured in a TRP-specific BFR-related configuration (and if there is no explicit BFD RS configuration in a cell-specific BFR-related configuration), a UE may configure cell-specific BFD RSs as a super set (union) of TRP-specific BFD RSs. In other words, a UE can configure cell-specific BFD RSs as a union of explicit TRP-specific BFD RSs configured for each TRP.

Alternatively, if an explicit BFD RS is configured in a TRP-specific BFR-related configuration (and if an explicit BFD RS is configured in a cell-specific BFR-related configuration), a UE expects a super set (union) of TRP-specific BFD RSs to match cell-specific BFD RSs (a UE does not expect any other configurations). In other words, a base station can configure a UE so that a super set (union) of TRP-specific BFD RSs matches cell-specific BFD RSs.

Through this, a UE can solve the problem regarding the issue 1 because a cell-specific BFRQ operation is triggered only in the case of beam failure for all TRPs.

For example, for a specific cell (or CC)/BWP, as in the example above, if CORESET 0 and 1 belong to CORESET pool (or CORESET group) 1, and CORESET 2 and 3 belong to CORESET pool (or CORESET group) 2, it is assumed that a UE selects a beam of CORESET 0 (i.e., QCL type-D RS) as a BFD RS of pool (group) 1 and a beam of CORESET 2 (i.e., QCL type-D RS) as a BFD RS of pool (group) 2. In this case, a UE can select both a beam of CORESET 0 and a beam of CORESET 2 as cell-specific BFD RS. (Or/and a base station may perform (explicit) BFD RS configuration for a beam of CORESET 0 and a beam of CORESET 2).

Issue 2: Regarding a specific cell (or CC)/BWP, in the above example, it is assumed that a UE has determined that a (implicit) BFD RS corresponding to a cell-specific BFR configuration is a beam of CORESET 0 and 1 and CORESET 2 (QCL type-D RS). In addition, it is assumed that a UE has determined a beam of CORESET 0 (i.e., QCL type-D RS) in CORESET pool (group) 1 and a beam of CORESET 2 (i.e., QCL type-D RS) in CORESET pool (group) 2 for the TRP-specific BFD RS. In this case, when detecting/determining beam failure of COSESET 0 and 2, a problem may occur in which a UE does not perform a cell-specific BFRQ (e.g., for Spcell, a PRACH-BFR (i.e., PRACH resource dedicated to BFR) trigger) even though beams of all TRPs for a cell (or CC)/BWP (e.g., SpCell) are broken.

Solution 2 for Issue 2: When a cell-specific BFR and an M-TRP BFR are configured together in a specific cell (or CC)/BWP (and if an explicit BFD RS is not configured in each BFR configuration), a UE may configure cell-specific BFD RSs as a sub-set (i.e., including a union) of a super set (union) of BFD RSs performed for M-TRP BFR configurations. Here, a UE can configure to include at least one BFD RS for each TRP (each CORESET pool or/and group) in cell-specific BFD RSs. That is, for a cell (or CC)/BWP, a UE may determine a TRP-specific BFD RS with a QCL type-D RS of CORESET(s) belonging to a CORESET pool (or group) corresponding to each TRP and may configure cell-specific BFD RSs as a subset of a union of TRP-specific BFD RSs that includes at least one TRP-specific BFD RS for each TRP.

If an explicit BFD RS is configured in a TRP-specific BFR-related configuration (and if there is no explicit BFD RS configuration in a cell-specific BFR-related configuration), a UE can configure cell-specific BFD RSs as a sub-set (i.e., including a union) of a super set (union) of TRP-specific BFD RSs. In other words, a UE can configure cell-specific BFD RSs as a subset of a union of explicit TRP-specific BFD RSs configured for each TRP. Even in this case, the cell-specific BFD-RSs may include at least one TRP-specific BFD RS for each TRP.

Alternatively, if an explicit BFD RS is configured in a TRP-specific BFR-related configuration (and if an explicit BFD RS is configured in a cell-specific BFR-related configuration), a UE expects cell-specific BFD RSs to match a subset (i.e., including the union) of a super set (union) of TRP-specific BFD RSs (a UE does not expect any other configurations). In other words, a base station can configure cell-specific BFD RSs to match a subset (i.e., including the union) of a super set (union) of the TRP-specific BFD RSs.

Through this, in the case of beam failure for all TRPs, a UE always triggers a cell-specific BFRQ operation (e.g., PRACH-BFR in the case of Spcell (i.e., PRACH resource dedicated to BFR)), therefore the problem with issue 2 can be resolved.

Issue 3: When both a cell-specific BFR and an M-TRP BFR are configured in an SpCell, when a UE detects /determines beam failure of all TRPs in the cell, a problem may arise in that it may be ambiguous whether a UE performs a PRACH-based BFRQ operation or a PUCCH-based BFRQ operation.

Solution 3 for issue 3: When configuring PRACH based BFD RSs as a super set (union) of BFD RSs performed for M-TRP BFR configurations as in solution 1 above, if a beam failure occurs in all TRPs (beam failure occurs in all M-TRP BFD RSs configured in SpCell), a UE can perform a PRACH-based BFRQ operation rather than a PUCCH-based BFRQ operation.

On the other hand, as in solution 2 above, when PRACH-based BFD RSs is configured as a sub-set (i.e., also includes a union) of a super set (union) of BFD RSs performed for M-TRP BFR configurations and is configured to include at least one BFD RS of TRP (each CORESET pool or/and group), even without separate configurations, a UE can perform a PRACH-based BFRQ operation (because a PRACH-based BFD RS corresponds to a sub-set of M-TRP BFD RS) before beam failure for all TRPs is detected/determined (before beam failure occurs in all M-TRP BFD RSs configured in an SpCell).

Alternatively, in Embodiment 2, a UE may not expect a base station to perform both Rel-15 (cell-specific) BFR configuration and Rel-17 (M-TRP) BFR configuration. In other words, a UE can perform operations according to either the Rel-15 (cell-specific) BFR configuration or the Rel-17 (M-TRP) BFR configuration configured by a base station.

Issue 4: When a cell-specific BFR and Rel-17 (M-TRP) BFR are configured together in a specific CC/BWP of a UE, and when a cell-specific BFR-related beam failure instance (BFI) counter and a TRP-specific BFI counter operate simultaneously, the following problems may occur.

For example, it is assumed that BFD RS #1 for TRP #1 and BFD RS #2 for TRP #2 are configured, and BFD RS #1 and #2 are configured for a cell-specific BFR. In addition, it is assumed that F=fail, S=success, and the maximum value for a BFI count is 3.

- Reception time of BFI = 1, 2, 3, 4
- RS #1 = F, S, F, F (BFI count=max)
- RS #2 = S, F, F, F (BFI count=max)

In the above case, for the TRP-specific BFD, a UE may determine a failure for all TRPs because BFI counts of RS #1 and RS #2 reaches respectively the max value at BFI reception time 4. On the other hand, from the cell's perspective, since it is S, S, F, and F for time 1, 2, 3, and 4 (if it is F for all BFD RS #1, #2, it will be determined as final F), a UE determines that a beam failure has not occurred in the cell-specific BFD.

Solution 4 for Issue 4: To configure an integrated BFR, a method of integrating BFI counts for a cell-specific BFR and a TRP-specific BFR is proposed as follows.

A UE can perform a BFI count for each TRP (using only a BFI count for a TRP-specific BFR). If any BFI count reaches the maximum value for each TRP-specific BFD RS (set), a BFRQ operation using a PUCCH-SR resource (i.e. (i.e., applicable scheduling request configuration (resource) for BFR)) may be triggered.

On the other hand, if beam failure is determined for all TRPs for each TRP-specific BFD RS (i.e., all BFI counts for each TPR reach max), a UE can perform a BFRQ operation using a PRACH resource. That is, if beam failure is determined for a TRP of some of multiple TRPs (e.g., one of two TRPs), a PUCCH-BFR operation of a UE is triggered, and if beam failure is determined for all of multiple TRPs (e.g., both TRPs), a PRACH-BFR operation of a UE may be triggered.

In an integrated BFR configuration, to enable the proposed UE operation, a base station can configure for a UE both a PRACH resource to be used in case of beam failure for all of multiple TRPs (e.g., both TRPs) and a PUCCH-SR resource to be used in the case of some of multiple TRPs (e.g., either one of the two TRPs). Alternatively, in this case, a base station can configure a UE to perform a BFR operation using only a PRACH resource (to prepare for the worst case).

After transmitting a PUCCH or PRACH for the BFR, a UE may transmit a BFR MAC-CE to a base station (if a UE is assigned an available UL-SCH or if there is a UL-SCH). Through the corresponding MAC-CE, it may be possible to report whether it is a beam failure of some (or a single) TRP or a beam failure (or cell-specific BF) of all TRPs. Here, if there is a UL-SCH already allocated to a UE, the BFR MAC-CE may be transmitted to a base station through the UL-SCH (omitting the PUCCH/PRACH transmission step described above).

In determining beam failure of all TRPs in the proposed method, a case in which beam failure occurs sequentially in each TRP may be included. That is, beam failure for each TRP may be determined simultaneously (i.e., at the same BFI reception time), but may also be determined at different BFI reception time. Therefore, if all beam failures for each TRP are determined within a predetermined time interval, a UE can determine beam failures for all TRPs.

For example, when a BFI count for TRP #1 is max and a BFI count for TRP #2 is non-zero (i.e., a value between 1 and max), a UE may determine that TRP #2 is also in a beam failure state. Additionally, a UE may determine beam failure for all TRPs at the time in time and trigger transmission of a PRACH for BFR. Alternatively, a UE may wait for a BFI count for TRP #2 to reach max (within a certain time or period), and when the BFI count for TRP #2 reaches max, the UE may determine beam failure for all TRPs and trigger transmission of a PRACH for BFR. Here, if the BFI count for TRP#2 does not reach max (within a certain time or period) or the BFI counter is reset, a UE may determine that there is a beam failure of a single TRP and transmit a PUCCH and/or a BFR MAC-CE for a BFR (if there is already an assigned UL-SCH).

And/or, for BFI counting, a UE may use both a TRP-specific (i.e., TRP-specific) BFI count and a cell-specific BFI count. In this case, if beam failure occurs for all TRPs (both CORESET pool index (or CORESET group index)) in a BFI count for each TRP (i.e., all TRP-specific BFI counts reach max) and beam failure occurs in a cell-specific BFI count (i.e., cell-specific BFI count reaches max), that is, a UE can perform a cell-specific BFR operation (e.g., PRACH-BFR trigger in the case of SpCell) only for beam failure of all TRPs and cell-specific beam failure.

In other words, if beam failure occurred for at least one TRP according to a BFI count for each TRP (beam failure for one of TRPs and/or beam failure for both TRPs) and beam failure did not occur according to a cell-specific BFI count, a UE can perform a BFRQ operation using a PUCCH-SR resource.

To enable the proposed UE operation, a base station can configure both a PRACH resource and a PUCCH-SR resource for BFRQ use for a UE in an integrated BFR configuration.

In the above-mentioned issue/solution 1/2/3/4, a BFD RS for a specific TRP may be a BFD RS corresponding to a specific CORESET pool index (or/and CORESET group index) within a CC (or cell)/BWP.

In addition, the solution 1/2/3/4 may not be a method only for each issue 1/2/3/4 (i.e., each issue 1/2/3/4 corresponds to one example), and may be used as an operation between a base station and a UE to solve other additional problems. In other words, any one of the above proposed solutions 1/2/3/4 or a combination of more than one solution can be used.

Regarding PUCCH-SR resource selection (i.e., it can be configured by an applicable scheduling request configuration (resource) for BFR, e.g., schedulingRequestID-BFR-SCell), at the standardization meeting, it was agreed that in configuring M-TRP specific BFR, PUCCH-SR resources for a BFRQ operation can be configured to up to two resources in a cell group. In the current standardization meeting, when a TRP-specific (or per-TRP) beam failure (BF) occurs in an SpCell (i.e., PCell/PSCell) and an SCell, discussions are ongoing as to which PUCCH of two PUCCH-SR resources a UE will use to perform a BFRQ operation as follows.

Table 11 illustrates the standardization discussion related to PUCCH resource selection.

[Table 11]

| For a UE configured with PUCCH -SR resources in a cell group when beam failure is detected in a single/multiple CCs in one or more of BFD-RS sets configured in one or more of CCs, |
| --- |
| - Down select one of the following PUCCH -SR resource selection rules (and their combinations) for the study, without precluding other alternatives, in RAN1#105-e |
| i) Alt-1: PUCCH -SR resource associated with other/non-failed BFD-RS set, association details FFS . |
| ii) Alt-2: PUCCH -SR resource associated with failed BFD-RS set, association details FFS . |

(continued)

| iii) Alt-3: Leave it up to UE implementation |
| --- |

As shown in Table 11, in the case of a UE configured with multiple PUCCH-SR resources, when a beam failure (BF) is detected within a single cell/multiple cells within one or more BFD-RS sets configured within one or more CCs, the UE may select a PUCCH-SR resource associated with a non-failed BFD-RS set or select a PUCCH-SR resource associated with a failed BFD-RS set.

In the present disclosure, based on which cell among an SpCell and an SCell a per-TRP BF (or TRP-based BF) occurred and/or based on a CA (carrier aggregation) relationship between a cell in which a per-TRP BF occurred and an SpCell (e.g., intra-band CA or inter-band CA), etc., which PUCCH-SR resource a UE will use for a BFRQ among up to two PUCCH-SR resources in a cell group is proposed.

Hereinafter, in the description of the present disclosure, a TRP mapping (or association) for each CC (component carrier)/cell is assumed to be the same (i.e., BFD-RS set #1 = TRP#1, BFD-RS set #2 = TRP#2), however this may change depending on network implementation, and the proposals below do not apply only to the limited situations above. That is, for example, in CC/cell 1, BFD-RS set #1 is mapped/associated with TRP#1, BFD-RS set #2 is mapped/associated with TRP#2, and in CC/cell 2, BFD-RS set #1 may be mapped/associated with TRP#2, and BFD-RS set #2 may be mapped/associated with TRP#1, in this case as well, the proposals below can be equally applied.

As described above, if up to two PUCCH-SR resources are configured within a cell group (cell) (e.g., master cell group (MCG) or secondary cell group (SCG) or PUCCH cell group, etc.), the corresponding PUCCH-SR resources may be configured in an SpCell within the cell group. More specifically, for example, an SpCell, SCell #1, SCell #2, and SCell #3 within a cell group may be configured, and up to two PUCCH-SR resources may be configured on the SpCell. Here, two BFD-RS sets corresponding to (mapping) each TRP can be configured/determined for each cell. Here, in up to two PUCCH-SR resources configured in the corresponding cell group, each may correspond to (associate with) a different TRP and each may correspond to (association with) a different BFD-RS set. Here, a correspondence (association) relationship between a PUCCH-SR resource and a TRP may be the same as or different from a correspondence (association) relationship between a PUCCH-SR resource and a BFD-RS set. In addition, a correspondence (association) relationship between a PUCCH-SR resource and a TRP and/or a correspondence (association) relationship between a PUCCH-SR resource and a BFD-RS set may be different for each cell, or may be the same for all cells within the corresponding cell group. And, in the above example, based on an assessment of radio link quality for a corresponding BFD-RS set (i.e., radio link quality of RSs belonging to the set), a per-TRP BF (i.e., BF for any one set among two BFD-RS sets) can be detected. In this case, when a per-TRP BF is detected in any one or more cell(s) of an SpCell, SCell #1, SCell #2, and SCell #3, it is necessary to determine on which PUCCH-SR resource transmission of a BFRQ (i.e., uplink transmission for BFR) is performed among up to two PUCCH-SR resources configured in the cell group.

Proposal A: Even if up to two PUCCH-SR resources are configured in a cell group, based on a type of cell in which BF occurred for each TRP (e.g., depending on an SCell or an SpCell , a UE can select a PUCCH resource for BFRQ PUCCH transmission (i.e., uplink transmission for BFR) as follows. For example, when a per-TRP BF (i.e., BF related to a specific TRP) occurs in an SCell, a UE can perform a BFRQ (i.e., uplink transmission for BFR) by using only a specific single/default PUCCH-SR resource among two PUCCH-SR resources (configured in a cell group to which the relevant SCell belongs). Alternatively, when a per-TRP BF occurs in an SpCell, a UE can select one or two PUCCH-SR resources among two PUCCH-SR resources (configured in a cell group to which an SpCell belongs) and perform BFRQ transmission (i.e., uplink transmission for BFR).

PUCCH selection in the SpCell may be performed by one or a combination of one or more of the following operations a to c.

a) A UE may transmit a BFRQ PUCCH by selecting a PUCCH-SR resource directed to (related to) a TRP other than a TRP in which a BF occurred in an SpCell. (e.g., one PUCCH-SR resource associated with a TRP in which a BF has not occurred).

b) A UE may select a PUCCH-SR resource related to a BFD-RS set in which a BF occurred or/and has not occurred in an SpCell and transmit a BFRQ PUCCH (e.g., i) one PUCCH-SR resource related to a BFD-RS set where a BF occurred, or ii) one PUCCH-SR resource related to a BFD-RS set in which a BF has not occurred, or iii) two PUCCH-SR resources).

c) A UE may transmit a BFRQ PUCCH by selecting a PUCCH-SR resource related to a CORESET pool index (e.g., RRC parameter CORESETpoolIndex)/CORESET group index in which a BF occurred or/and in which a BF has not occurred in an SpCell (e.g., i) one PUCCH-SR resource related to a CORESET pool index/CORESET group index in which a BF occurred, or ii) one PUCCH-SR resource related to a CORESET pool index/CORESET group index in which a BF has not occurred, or iii) two PUCCH-SR resources).

Since a cell through which a BFRQ PUCCH is transmitted is an SpCell, when a per-TRP BF of a specific TRP occurs in the SpCell, in order to stably/reliably transmit the BFRQ PUCCH to a TRP other than a TRP in which a BF occurred, as described above an operation of PUCCH selection is define/configured. For example, if a UE selects a PUCCH-SR resource related to a BFD-RS set index/CORESET pool index/CORESET group index in which a BF occurred and transmits a BFRQ PUCCH, the UE can expect that a base station has performed UL spatial relation or/and UL power control to direct the related PUCCH-SR resource to a TRP other than a TRP in which a BF occurred. As another example, if a UE selects a PUCCH-SR resource related to a BFD-RS set index/CORESET pool index/CORESET group index in which a BF has not occurred and transmits a BFRQ PUCCH, the UE can expect that a base station has performed UL spatial relation or/and UL power control to direct the related PUCCH-SR resource to a TRP other than a TRP in which a BF occurred.

Proposal B: In addition to the operation of Proposal A above, in an SCell in which an SpCell other than an SpCell and an intra-band CA are configured, as in proposal A above, a UE can perform BFRQ PUCCH transmission (i.e., uplink transmission for BFR) through PUCCH selection using up to two PUCCH-SR resources within a cell group. In other words, for an SCell with an intra-band CA set with an SpCell, the operation when a per-TRP BF (i.e., BF related to a specific TRP) occurs in an SpCell in proposal A can be applied in the same way.

Referring again to Table 2 above, the NR frequency band is defined as two types of frequency ranges (FR1 and FR2). Additionally, in the NR system, a frequency range (e.g., 1920 MHz - 1980 MHz) and duplex mode are defined for each operating band within each FR1 and FR2. Here, an intra-band CA means integrating of multiple carriers (or cells) belonging to the same operating band, and multiple carriers (or cells) used for an intra-band CA may be continuous or may not be continuous in a frequency domain. Additionally, an inter-band CA refers to integrating of multiple carriers (or cells) belonging to different operating bands (e.g., 2 to 5 bands).

A cell in which a BFRQ PUCCH is transmitted is an SpCell, however in the case of an SCell in which an intra-band CA is configured with an SpCell that is relatively close to an SpCell in a frequency domain, when a BF occurs at a specific TRP of the SCell, the intention of Proposal B is that when a BF occurs in a specific TRP of the SCell, there is a high possibility that a BF also occurs in the corresponding TRP in an SpCell. Therefore, the purpose is to stably/reliably transmit a BFRQ PUCCH to a TRP other than a TRP in which a BF occurred. In addition, in the case of an intra-band CA, there is a high possibility that a UE utilizes the same hardware (e.g., the same RF chain, the same antenna(s), etc.) for different CCs, so this operation is designed to keep in mind that in an intra-band CA situation, if a BF occurs in a specific TRP within a specific cell, the same BF may occur in other cells.

Proposal C: A UE performs PUCCH selection using two PUCCH-SR resources (regardless of intra/inter-band CA) in all cells within a specific cell group, and the UE terminal can perform PUCCH selection according to one or more of the conditions below. In addition, the UE can perform BFRQ PUCCH transmission (i.e., uplink transmission for BFR) using the selected PUCCH resource.

1) When a per-TRP BF occurs (detected) in an SpCell: A BFRQ PUCCH can be transmitted by selecting a PUCCH-SR resource according to the method of proposal A above. For example, if cell #0 (SpCell), cell #1 (SCell), cell #2 (SCell), and cell #3 (SCell) belong to a cell group, this may mean that a per-TRP BF is detected in cell #0.

2) When a per-TRP BF occurs (detected) in an SCell (or when a per-TRP BF occurs in one or multiple cells at the same time), a UE may transmit a BFRQ PUCCH by selecting a PUCCH-SR resource according to one of the following methods or a combination of multiple methods. In the above example, this may mean that a per-TRP BF is detected in one or more of cell #1, cell #2, and cell #3.

- A UE may compare BFI counters of BFD-RS set #1 and BFD-RS set #2 in all cells (i.e., across all cells within a cell group), and may select a PUCCH-SR resource related to a BFD-RS set index/CORESETpoolIndex/CORESET group index with a large total sum of BFI values (e.g., BFD-RS set index/CORESETpoolIndex/CORESET group index with a larger BFI counter across all cells in a cell group) (or/and the smaller one) and transmit a BFRQ PUCCH. In the above example, a UE may calculate the sum of BFI counters of BFD-RS set #1 and the sum of BFI counters of BFD-RS set #2 for all cell #0, cell #1, cell #2, and cell #3, respectively (i.e., even in a cell where a BF is not detected, a BFI counter can be counted between 0 and the maximum value). Additionally, BFRQ PUCCH transmission (i.e., uplink transmission for BFR) can be performed using a PUCCH resource corresponding to (associative with) a BFD-RS set of a larger (and/or smaller) BFI counter.

- (If a per-TRP BF occurs in multiple cells at the same time) A UE may transmit a BFRQ PUCCH by selecting a PUCCH-SR resource related to a BFD-RS set index/CORESETpoolIndex/CORESET group index (or/and vice versa) where many BFs occurred across all cells in a cell group. In the above example, a UE may calculate the number of BF occurrences (detection) of BFD-RS set #1 and the number of BF occurrences (detection) of BFD-RS set #2 for all cell #1, cell #2, and cell #3, respectively (Here, cell #0 is an SpCell, so if a BF has occurred (detected), a UE can perform the operation according to method 1) above). In addition, BFRQ PUCCH transmission (i.e., uplink transmission for BFR) can be performed using a PUCCH resource corresponding to (associative with) a larger (and/or smaller) number of BF occurrences (detection).

- A UE can compare a per-TRP BF status of an SpCell or a TRP-specific BFI counter. In addition, a UE may transmit a BFRQ PUCCH by selecting a PUCCH-SR resource related to a BFD-RS index/CORESETpoolIndex/CORESET group index where a BF occurred (or has not occurred) or/and whose BFI counter value is larger (or smaller). In the above example, after a per-TRP BF occurs (detected) in any one or more of cell #1, cell #2, and cell #3, if a per-TRP BF occurred (detected) in cell #0 before transmitting a BFRQ PUCCH, a PUCCH-SR resource related to a BFD-RS index/CORESETpoolIndex/CORESET group index in which a BF has not occurred (or occurred) in cells #0 to #3 may be selected. Additionally, as described above, if a BF occurred (detected) in an SpCell, a UE may perform the operation according to method 1) above. Alternatively, in the example above, for one or more cells in which a per-TRP BF occurred (detected) among cell #1, cell #2, and cell #3, and cell #0, a UE may calculate the sum of the BFI counters of BFD-RS set #1 and the sum of the BFI counters of BFD-RS set #2, respectively and perform BFRQ PUCCH transmission (i.e., uplink transmission for BFR) using a PUCCH resource corresponding to (associative with) a BFD-RS set of the larger (and/or small) BFI counter.

- Based on a TRP-specific BF that occurred in a CC (SCell) closest to an SpCell in a frequency (FR) domain, a BFRQ PUCCH can be transmitted by selecting a PUCCH-SR resource related to a BFD-RS index/CORESETpoolIndex/CORESET group index where a BF occurred (or has not occurred). In the above example, when a per-TRP BF occurs (detected) in cell #1 and cell #2, if cell #1 is a cell closer to cell #0 in a frequency domain, a UE can select a PUCCH-SR resource related to a BFD-RS index/CORESETpoolIndex/CORESET group index where a BF occurred (or has not occurred) based on cell #1.

Proposal D: A method of prioritizing a per-TRP BF situation or/and a TRP-specific BFI counter of an SpCell over that of an SCell

As described above, PUCCH transmission for BFR of a UE is performed in an SpCell (PCell/PSCell), therefore even if a specific TRP BF occurs in an SCell, a TRP-specific BF status of an SpCell can be considered an important factor in PUCCH transmission reliability. For example, if a BF occurs first in TRP #1 (BFD-RS set #1) in SCell #1, and a BF occurs in TRP #2 (BFD-RS set #2) in a PCell at the same time or very close to it, since a BF occurred in TRP #1 in an SCell due to the above RANI discussion, transmitting BFRQ on a PUCCH resource destined for TRP #2 may not be appropriate because TRP #2 of a PCell is in a BF situation. Therefore, this proposal D describes a method of prioritizing an SpCell's per-TRP BF situation or/and a TRP-specific BFI counter situation.

Table 12 illustrates a summary of the procedure for existing Rel-16 cell-specific BFR.

[Table 12]

| |
|---|
| A) Only one PUCCH-SR resource for BFRQ purpose is configured in a cell group. |
| B) BFR procedure |
| 1) In an MAC layer, a BF occurs in a specific SCell due to a BFI counter operation for each cell. |
| 2) Determining whether to transmit a PUCCH |
| - If there are an available PUSCH (UL-SCH) resource in a UE, a BFR MAC-CE is transmitted using a PUSCH |
| - If there are no available PUSCH (UL-SCH) resources in a UE, a BFR MAC-CE is transmitted using a PUSCH scheduled after an SR using a PUCCH-SR resource. |
| 3) The MAC-CE includes BF information on the SCell (e.g., cell index, new beam information (if found), information on whether a new beam was found or not, etc.) that caused BFR. |
| - Note 1: After a BF occurs in a specific SCell, 1) a BFR PUCCH is triggered (can be omitted) and 2) until a MAC-CE is transmitted, even if a BF occurs in another SCell, a PUCCH is transmitted only by a BF of the SCell where the BF first |
| occurred. |
| - Note 2: After a BF occurs in a specific SCell, if a BF occurs in another SCell until 1) a BFR PUCCH is triggered (can be omitted) and 2) in case a BF occurs in another SCell before MAC-CE transmission, the relevant BF information is also loaded into a MAC-CE, and if the MAC-CE has already been transmitted, it is ignored. |
| 4) After receiving a gNB response to a corresponding PUSCH, update a CORESET and a PUCCH beam of the SCell(s) where a corresponding BF occurred with a new beam |

In the present disclosure, transmitting a PUCCH-SR resource directed to a specific TRP (i.e., transmitting a BFRQ using a PUCCH-SR resource) can be understood as transmitting a PUCCH-SR resource (i.e., transmitting a BFRQ using a PUCCH-SR resource) related or unrelated to a BFD-RS set index/CORESETpoolIndex/CORESET group index related to (corresponding to) the TRP.

If a per-TRP BF occurs (detected) in an SCell, a UE may transmit a BFRQ PUCCH according to one of the following operations or a combination of multiple operations.

- If a TRP-specific BF occurs (detected) in an SCell, and a TRP-specific BF occurs (detected) in an SpCell before transmitting a PUCCH-SR resource in the SpCell, a UE can transmit uplink for BFR on a PUCCH-SR resource selected based on the TRP-specific BF occurred (detected) in the SpCell (i.e., regardless of the TRP-specific BF occurred (detected) in the SCell). For example, When a TRP-specific BF occurs in an SpCell (SpCell TRP #2 BF) before a BF for TRP #1 (BFD-RS set #1) occurs in SCell #1 and a PUCCH-SR resource is transmitted in an SpCell to TRP #2, a UE can cancel the PUCCH that was to be transmitted in the SpCell to TRP #2 and transmit a PUCCH-SR resource destined for TRP #1. As another example, when a TRP-specific BF occurs in an SpCell (SpCell TRP #2 BF) before a BF for TRP #1 (BFD-RS set #1) occurs in SCell #1 and a PUCCH-SR resource is transmitted in an SpCell to TRP #1, a UE can cancel the PUCCH that was to be transmitted in the SpCell to TRP #1 and transmit a PUCCH-SR resource destined for TRP #2.

Here, if a UE has already transmitted a PUCCH-SR resource directed to TRP #2 in an SpCell due to a BF occurring (detected) in TRP #1 (BFD-RS set #1) in an SCell (i.e., if TRP #2 BF is occurred (detected) in an SpCell after transmitting a PUCCH SR resource), the above operation may not be applied.

In addition, when a TRP-based BF for the same TRP (or BFD-RS set index/CORESETpoolIndex/CORESET group index) occurs (detected) in one or more SCells and SpCells belonging to the same cell group, the above operation may not be applied. That is, in the above example, when TRP #1 BF occurs in an SpCell before a BF for TRP #1 (BFD-RS set #1) occurs in SCell #1 and a PUCCH-SR resource is transmitted in an SpCell to TRP #1 (or TRP #2), a UE can transmit a PUCCH-SR resource in an SpCell to TRP #1 (or TRP #2).

In other words, the above operation occurs when a BF for different TRPs (i.e., first BFD-RS set index/CORESETpoolIndex/CORESET group index) occurs (detected) in one or more SCells and SpCells belonging to the same cell group, a TRP-based BF occurred (detected) in an SpCell is given priority.

- Due to a BF for TRP #1 (BFD-RS set #1) occurred in SCell #1 transmission of a PUCCH-SR resource in an SpCell to TRP #1 (or TRP #2) is completed, and when a TRP-specific BF occurs in an SpCell before transmitting a BFR MAC-CE to TRP #1 or/and TRP #2 (SpCell TRP #2 BF), a UE may additionally transmit a PUCCH-SR resource in an SpCell to TRP #2 (or TRP #1) . Afterwards, the UE transmits a BFR MAC-CE to TRP #1 or/and TRP #2.

Here, if a BF occurs (detected) in TRP #1 (BFD-RS set #1) in an SCell and a UE has already transmitted a BFR MAC-CE to TRP #1 or/and TRP #2 in an SpCell (i.e., if TRP #2 BF is occurred (detected) in an SpCell after BFR MAC-CE transmission to TRP #1 or/and TRP #2), the above operation is not applied.

On the other hand, due to a BF for TRP #1 (BFD-RS set #1) occurred in SCell #1 transmission of a PUCCH-SR resource in an SpCell to TRP #1 (or TRP #2) is completed, and when a TRP-specific BF occurs in an SpCell before transmitting a BFR MAC-CE to TRP #1 or/and TRP #2 (SpCell TRP #1 BF), a UE may additionally transmit a PUCCH-SR resource directed to TRP #1 (or TRP #2) in an SpCell. Even in this case, a UE can transmit a BFR MAC-CE to TRP #1 or/and TRP #2.

[0291] - When a TRP-specific BFI counter for a specific SCell within a specific (e.g., fixed or configured by a base station) monitoring period reaches its maximum value (per-TRP BF occurs), and when, at the same time, a counter value of a specific TRP in an SpCell's TRP-specific BFR counter reaches a certain threshold, a UE can suspend PUCCH transmission by the corresponding SCell and wait for a BFI counter status of an SpCell. If a (TRP-specific) BF does not occur in an SpCell (e.g., if a BFD timer (beamFailureDetectionTimer) expires before a BFI counter for a specific TRP in an SpCell reaches its maximum value), a UE can transmit a PUCCH-SR resource by the corresponding SCell (e.g., PUCCH-SR resource transmission directed to a TRP in which a TRP BF was detected (or not detected) in the corresponding SCell). Alternatively, when a (TRP-specific) BF occurs in an SpCell (i.e., a BFI counter for a specific TRP in an SpCell reaches the maximum value), depending on a TRP-specific BF situation of the corresponding SpCell, a UE may select/transmit a PUCCH-SR resource directed to a TRP for which a BF has been detected (or not detected).

On the other hand, when a TRP-specific BFI counter for a specific SCell within a specific (e.g., fixed or configured by a base station) monitoring period reaches its maximum value (per-TRP BF occurs), and when, at the same time, a counter value of a specific TRP in an SpCell's TRP-specific BFR counter does not reach a certain threshold, a UE can transmit a PUCCH resource by the corresponding SCell as is (e.g., PUCCH-SR resource transmission directed to a TRP in which a TRP BF was detected (or not detected) in a corresponding SCell).

A UE and a base station can perform BFD and/or BFR operations based on any one of the above-described proposals A, B, C, and D, or a combination of multiple methods.

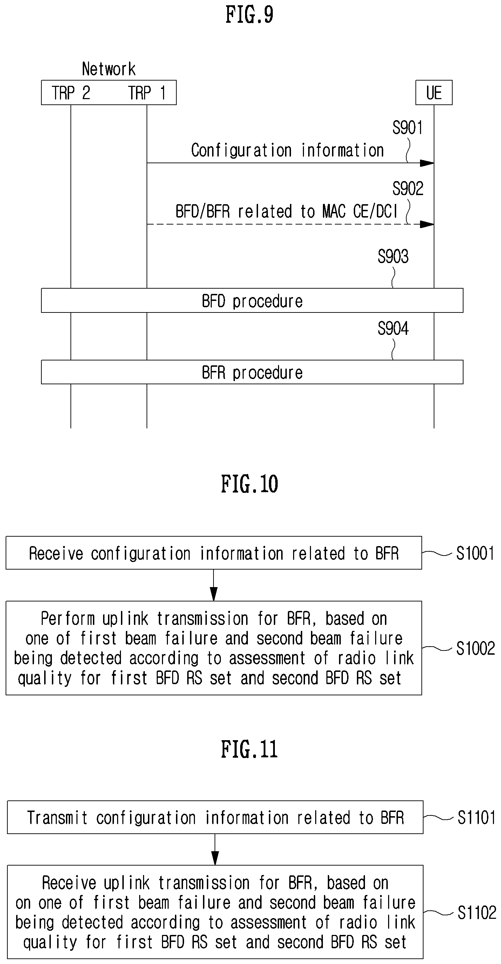

FIG. 9 illustrates a signaling method for an uplink transmission and reception method for beam failure recovery according to an embodiment of the present disclosure.

FIG. 9 illustrates signaling between a UE and a network (e.g., TRP 1, TRP 2) in a situation of multiple TRPs (i.e., M-TRPs, or multiple cells, hereinafter, all TRPs may be substituted with a cell) that methods proposed in the present disclosure (e.g., any one or a combination of one or more (detailed) embodiments in the detailed embodiments of Proposal 1, the detailed embodiments (solutions) for Embodiments 1 and 2, etc., any one or a combination of one or more of Proposals A to D) may be applied. Here, a UE/a Network is just an example, and may be substituted with a variety of devices and applied. FIG. 9 is just for convenience of a description, and it does not limit a scope of the present disclosure. In addition, some step(s) illustrated in FIG. 9 may be omitted according to a situation and/or a configuration, etc.

In reference to FIG. 9, for convenience of a description, signaling between 2 TRPs and a UE is illustrated, but a corresponding signaling method may be extended and applied to signaling between a plurality of TRPs and a plurality of UEs. In the following description, a network may be one base station including a plurality of TRPs or may be one cell including a plurality of TRPs. In an example, an ideal/a non-ideal backhaul may be configured between TRP 1 and TRP 2 configuring a network. In addition, the following description is described based on a plurality of TRPs, but it may be equally extended and applied to transmission through a plurality of panels. In addition, in the present disclosure, an operation that a terminal receives a signal from TRP1/TRP2 may be interpreted/described (or may be an operation) as an operation that a terminal receives a signal from a network (through/using TRP1/2) and an operation that a terminal transmits a signal to TRP1/TRP2 may be interpreted/described (or may be an operation) as an operation that a terminal transmits a signal to a network (through/using TRP1/TRP2) or may be inversely interpreted/described.

In reference to FIG. 9, a case is assumed that a UE receives a configuration/DCI from a representative TRP (e.g., TRP 1) in a situation of M-TRPs (or a cell, hereinafter, all TRPs may be substituted with a cell/a panel, or a case in which a plurality of CORESETs are configured from one TRP may be assumed as M-TRPs). It is just for convenience of a description, even when a UE receives a configuration/DCI from at least one TRP, a method described below may be extended and applied. In an example, the representative TRP may be a TRP which delivers/transmits to a UE a signal related to a system information block (SIB)/paging/a random access (RA).

A UE may receive configuration information through/using TRP 1 (and/or TRP 2) from a Network (S901).

The configuration information may include information related to a configuration of a network (e.g., a TRP configuration) / M-TRP based transmission and reception (e.g., resource allocation, etc.), etc. In this case, the configuration information may be transmitted through higher layer signaling (e.g., RRC signaling, MAC-CE, etc.).

For example, the configuration information may include configuration information related to a BFD procedure and/or a BFR procedure described in the above-described proposed methods (e.g., any one or a combination of one or more (detailed) embodiments in the detailed embodiments of Proposal 1, the detailed embodiments (solutions) for Embodiments 1 and 2, etc., any one or a combination of one or more of Proposals A to D). In an example, the configuration information may include information on CORESET(s) / COREST group(s) related to each TRP (e.g., a TCI state(s) configuration related to a CORESET group / a CORESET group identifier (ID), etc.). In an example, the configuration information may include a CORESET configuration. In an example, the configuration information may include information on BFD RS(s) / BFD RS set(s) related to the BFD procedure, and as the case may be, BFD RS(s) / BFD RS set(s) may not be explicitly configured/indicated. In an example, the configuration information may include information on a plurality of RSs (reference signal) for a spatial relation assumption (e.g., a QCL relation) configured for a specific CORESET(/CORESET group) (i.e., a RS or a QCL type D RS that a QCL related to a spatial Rx parameter is configured). In an example, the configuration information may include configuration information on a BFRQ resource related to the BFR procedure.

For example, in a multi-TRP based transmission/reception operation, the configuration information may include information on BFD RS(s)/BFD RS set(s) associated with the BFD procedure associated with each TRP (for a specific cell or cell group). Additionally, the configuration information may include information on a PUCCH resource related to the BFR procedure associated with each TRP (for a specific cell or cell group). For example, the configuration information may include information on a first BFR RS set (including one or more RS) corresponding to TRP 1 and a second BFR RS set (including one or more RS) corresponding to TRP 2. Alternatively, the configuration information may not include explicit information on the first BFR RS set and the second BFR RS set. In this case, for example, a UE may determine the first BFR RS set and the second BFR RS set, respectively, including QCL (quasi co-location) RSs for spatial reception parameters configured in control resource sets (CORESETs) having different control resource set pool indexes. Additionally, the configuration information may include information on a first PUCCH resource for BFR corresponding to TRP 1 and a second PUCCH resource for BFR corresponding to TRP 2, for a TRP-specific BFR procedure. Additionally, the configuration information may include information on a PRACH resource for BFR, for a cell-specific BFR procedure.

A UE may receive BFD / BFR related information through MAC-CE and/or DCI through/with TRP 1 (and/or TRP 2) from a Network (S902). For example, as in the above-described proposed methods (e.g., any one or a combination of one or more (detailed) embodiments in the detailed embodiments of Proposal 1, the detailed embodiments (solutions) for Embodiments 1 and 2, etc., any one or a combination of one or more of Proposals A to D), a UE may receive information related to a BFD procedure and/or a BFR procedure through MAC-CE signaling and/or DCI. For example, information indicating/configuring a RS which will be used as a BFD RS among a plurality of RSs (reference signal) for the spatial relation assumption (e.g., a QCL relation) (i.e., a RS or a QCL type D RS that a QCL related to a spatial Rx parameter is configured) may be received through MAC-CE and/or DCI.

A UE may perform a BFD procedure with a Network (via/using TRP 1 and/or TRP 2) (S903). For example, a UE may perform the BFD procedure based on the proposed methods described above (e.g., any one or a combination of one or more (detailed) embodiments in the detailed embodiments of Proposal 1, the detailed embodiments (solutions) for Embodiments 1 and 2, etc., any one or a combination of one or more of Proposals A to D). For example, a UE may perform a BFD procedure based on BFD RS (or BFR RS).

A UE may receive RSs included in each of a first BFR RS set (explicitly or implicitly configured) corresponding to a first TRP and a second BFR RS set (explicitly or implicitly configured) corresponding to a second TRP and may assess radio link quality for the received RSs. Here, assessing radio link quality may mean comparing a hypothetical BLER (or SINR, RSRP) for each RS with a threshold as described above. In addition, a UE may count a first BFI and a second BFI, respectively, according to an assessment of radio link quality (increment a BFI value by 1 when radio link quality is worse than a predefined threshold). And, when a count value for a first BFI and/or a count value for a second BFI reaches the maximum value, a UE may determine that first beam failure and/or second beam failure has been detected. That is, a UE can individually assess radio link quality for each TRP, count a BFI individually for each TRP, and individually determine for each TRP whether beam failure has been detected.

A UE may perform a BFR procedure with a Network (via/using TRP 1 and/or TRP 2) (S904). For example, a UE may perform a BFR procedure based on the proposed methods described above (e.g., any one or a combination of one or more (detailed) embodiments in the detailed embodiments of Proposal 1, the detailed embodiments (solutions) for Embodiments 1 and 2, etc., any one or a combination of one or more of Proposals A to D).

As described above, a UE can individually determine detection of beam failure for each TRP. Additionally, a BFR procedure can be performed for each TRP in which a beam failure is detected. When either the first beam failure or the second beam failure is detected, a UE may perform uplink transmission (i.e., BFR request or link recovery request or scheduling request for BFR) on a corresponding PUCCH resource among the first PUCCH resource and the second PUCCH resource.

Here, based on a type of cell (e.g., SpCell, SCell) in which one of a first beam failure and a second beam failure is detected within one cell group (e.g., MCG, SCG, PUCCH group, etc.), a PUCCH resource for uplink transmission may be determined Among a first PUCCH resource and a second PUCCH resource.

If one of the first beam failure or the second beam failure is detected in an SpCell (PCell/PSCell) within one cell group, the PUCCH resource for the uplink transmission may be determined as a PUCCH resource corresponding to a BFD RS set in which a beam failure is detected (or not detected) among the first PUCCH resource and the second PUCCH resource.

On the other hand, when one of the first beam failure and the second beam failure is detected in one or more SCells in one cell group, the PUCCH resource for the uplink transmission may be determined as one of the first PUCCH resource and the second PUCCH resource depending on whether the first beam failure and/or the second beam failure is detected in the SpCell within the cell group.

More specifically, when a beam failure different from the one or more SCells in the SpCell within the cell group prior to the uplink transmission due to detection of one of the first beam failure and the second beam failure for the one or more SCells is detected, the PUCCH resource for the uplink transmission may be determined as a PUCCH resource corresponding to a BFD RS set in which a beam failure is detected (or not detected) in the SpCell among the first PUCCH resource and the second PUCCH resource.

Alternatively, one of the first beam failure and the second beam failure may be detected in one or more SCells in the cell group within a predetermined monitoring period, and a BFI counter value associated with one of the first BFD RS set and the second BFD RS set in the SpCell within the cell group may be greater than or equal to a threshold. In this case, the uplink transmission may be suspended until a beam failure associated with one of the first BFD RS set and the second BFD RS set is detected in the SpCell. While the uplink transmission is suspended, if a beam failure associated with one of the first BFD RS set and the second BFD RS set is detected in the SpCell, the PUCCH resource for the uplink transmission may be determined as a PUCCH resource corresponding to a BFD RS set in which a beam failure is detected (or not detected) in the SpCell among the first PUCCH resource and the second PUCCH resource. On the other hand, while the uplink transmission is suspended, if a beam failure associated with one of the first BFD RS set and the second BFD RS set is not detected in the SpCell, the PUCCH resource for the uplink transmission may be determined as a PUCCH resource corresponding to a BFD RS set in which a beam failure is detected (or not detected) in the one or more SCells among the first PUCCH resource and the second PUCCH resource.

On the other hand, one of the first beam failure and the second beam failure may be detected in one or more SCells in the cell group within a predetermined monitoring period, and a BFI counter value associated with one of the first BFD RS set and the second BFD RS set in the SpCell within the cell group may be less than a threshold. In this case, the PUCCH resource for the uplink transmission may be determined as a PUCCH resource corresponding to a BFD RS set in which beam failure is detected (or not detected) in the one or more SCells among the first PUCCH resource and the second PUCCH resource.

Meanwhile, after transmitting the uplink, a UE may receive DCI for PUSCH scheduling from a base station. In this case, a UE may transmit a MAC-CE for BFR to a base station through a PUSCH. Here, the MAC-CE for BFR may include at least one of an index of a cell in which a beam failure was detected, information on whether a new beam was found, new beam information, and an index of a BFD RS set in which a beam failure was detected.

Alternatively, if a UE has an available PUSCH (already allocated), uplink transmission (i.e., BFR request or link recovery request or scheduling request for BFR) through a PUCCH may be omitted, and may also transmit a BFR MAC CE to a base station through the corresponding PUSCH. That is, the transmission operation of the uplink transmission (i.e., BFR request, link recovery request, or scheduling request for BFR) may be omitted.

Based on one of the first beam failure or the second beam failure being detected in one or more SCells in one cell group, if a beam failure different from the one or more SCells is detected in the SpCell in the cell group after the uplink transmission but before the transmission of the BFR MAC-CE, the uplink transmission may be additionally performed on a PUCCH resource corresponding to a BFD RS set in which a beam failure is detected (or not detected) in the SpCell.

Beam failure may be declared by a UE that has assessed radio link quality in the above method, and the uplink transmission (i.e., BFR request or link recovery request or scheduling request for BFR) may be performed. In addition, a network that received the uplink transmission (i.e., BFR request or link recovery request or scheduling request for BFR) may perform beam recovery for each TRP or each cell (or CC) through various processes such as beam RS transmission and beam reporting request, etc.

FIG. 10 is a diagram illustrating an operation of a terminal in an uplink transmission method for beam failure recovery according to an embodiment of the present disclosure.

FIG. 10 illustrates an operation of a terminal based on the proposed methods (e.g., any one or a combination of one or more (detailed) embodiments in the detailed embodiments of Proposal 1, the detailed embodiments (solutions) for Embodiments 1 and 2, etc., any one or a combination of one or more of Proposals A to D). An example in FIG. 10 is for convenience of a description, and it does not limit a scope of the present disclosure. Some step(s) illustrated in FIG. 10 may be omitted according to a situation and/or a configuration. In addition, in FIG. 10, a UE is just one example, and may be implemented by a device illustrated in the following FIG. 12. For example, a processor 102/202 in FIG. 12 may control to transmit and receive a channel/a signal/data/information, etc. by using a transceiver 106/206 and may also control to store a channel/a signal/data/information, etc. which will be transmitted or received in a memory 104/204.

In addition, an operation in FIG. 10 may be processed by one or more processors 102 and 202 in FIG. 12 and an operation in FIG. 10 may be stored in a memory (e.g., one or more memories (104, 204) in FIG. 12) in a form of a command/a program (e.g., an instruction, an executable code) for operating at least one processor (e.g., 102, 202) in FIG. 12.

Referring to FIG. 10, a UE receives configuration information related to BFR from a base station (S1001).

The configuration information may include configuration information related to a BFD procedure and/or a BFR procedure described in the above-described proposed methods (e.g., any one or a combination of one or more (detailed) embodiments in the detailed embodiments of Proposal 1, the detailed embodiments (solutions) for Embodiments 1 and 2, etc., any one or a combination of one or more of Proposals A to D). In an example, the configuration information may include information on CORESET(s) / COREST group(s) related to each TRP (e.g., a TCI state(s) configuration related to a CORESET group / a CORESET group identifier (ID), etc.). In an example, the configuration information may include a CORESET configuration. In an example, the configuration information may include information on BFD RS(s) / BFD RS set(s) related to the BFD procedure, and as the case may be, BFD RS(s) / BFD RS set(s) may not be explicitly configured/indicated. In an example, the configuration information may include information on a plurality of RSs (reference signal) for a spatial relation assumption (e.g., a QCL relation) configured for a specific CORESET(/CORESET group) (i.e., a RS or a QCL type D RS that a QCL related to a spatial Rx parameter is configured). In an example, the configuration information may include configuration information on a BFRQ resource related to the BFR procedure.

For example, in a multi-TRP based transmission/reception operation, the configuration information may include information on BFD RS(s)/BFD RS set(s) associated with the BFD procedure associated with each TRP (for a specific cell or cell group). Additionally, the configuration information may include information on a PUCCH resource related to the BFR procedure associated with each TRP (for a specific cell or cell group). For example, the configuration information may include information on a first BFR RS set (including one or more RS) corresponding to TRP 1 and a second BFR RS set (including one or more RS) corresponding to TRP 2. Alternatively, the configuration information may not include explicit information on the first BFR RS set and the second BFR RS set. In this case, for example, a UE may determine the first BFR RS set and the second BFR RS set, respectively, including QCL (quasi co-location) RSs for spatial reception parameters configured in control resource sets (CORESETs) having different control resource set pool indexes. Additionally, the configuration information may include information on a first PUCCH resource for BFR corresponding to TRP 1 and a second PUCCH resource for BFR corresponding to TRP 2, for a TRP-specific BFR procedure. Additionally, the configuration information may include information on a PRACH resource for BFR, for a cell-specific BFR procedure.

Meanwhile, although not shown in FIG. 10, a UE may receive information related to a BFD procedure and/or BFR procedure from a base station through MAC-CE signaling and/or DCI.

Based on one of a first beam failure and a second beam failure being detected according to an assessment of radio link quality for a first BFR RS set and a second BFR RS set, a UE performs uplink transmission for BFR to a base station (S1002).

For example, a UE may perform the BFD procedure and the BFR procedure based on the proposed methods described above (e.g., any one or a combination of one or more (detailed) embodiments in the detailed embodiments of Proposal 1, the detailed embodiments (solutions) for Embodiments 1 and 2, etc., any one or a combination of one or more of Proposals A to D).

A UE may receive RSs included in each of a first BFR RS set (explicitly or implicitly configured) corresponding to a first TRP and a second BFR RS set (explicitly or implicitly configured) corresponding to a second TRP and may assess radio link quality for the received RSs. In addition, a UE may count a first BFI and a second BFI, respectively, according to an assessment of radio link quality (increment a BFI value by 1 when radio link quality is worse than a predefined threshold). And, when a count value for a first BFI and/or a count value for a second BFI reaches the maximum value, a UE may determine that first beam failure and/or second beam failure has been detected. That is, a UE can individually assess radio link quality for each TRP, count a BFI individually for each TRP, and individually determine for each TRP whether beam failure has been detected. And, when either the first beam failure or the second beam failure is detected, a UE may perform the uplink transmission (i.e., BFR request or link recovery request) on the corresponding PUCCH resource among the first PUCCH resource and the second PUCCH resource.

Here, based on a type of cell (e.g., SpCell, SCell) in which one of a first beam failure and a second beam failure is detected within one cell group (e.g., MCG, SCG, PUCCH group, etc.), a PUCCH resource for uplink transmission may be determined Among a first PUCCH resource and a second PUCCH resource.

If one of the first beam failure or the second beam failure is detected in an SpCell (PCell/PSCell) within one cell group, the PUCCH resource for the uplink transmission may be determined as a PUCCH resource corresponding to a BFD RS set in which a beam failure is detected (or not detected) among the first PUCCH resource and the second PUCCH resource.

On the other hand, when one of the first beam failure and the second beam failure is detected in one or more SCells in one cell group, the PUCCH resource for the uplink transmission may be determined as one of the first PUCCH resource and the second PUCCH resource depending on whether the first beam failure and/or the second beam failure is detected in the SpCell within the cell group.

More specifically, when a beam failure different from the one or more SCells in the SpCell within the cell group prior to the uplink transmission due to detection of one of the first beam failure and the second beam failure for the one or more SCells is detected, the PUCCH resource for the uplink transmission may be determined as a PUCCH resource corresponding to a BFD RS set in which a beam failure is detected (or not detected) in the SpCell among the first PUCCH resource and the second PUCCH resource.

Alternatively, one of the first beam failure and the second beam failure may be detected in one or more SCells in the cell group within a predetermined monitoring period, and a BFI counter value associated with one of the first BFD RS set and the second BFD RS set in the SpCell within the cell group may be greater than or equal to a threshold. In this case, the uplink transmission may be suspended until a beam failure associated with one of the first BFD RS set and the second BFD RS set is detected in the SpCell. While the uplink transmission is suspended, if a beam failure associated with one of the first BFD RS set and the second BFD RS set is detected in the SpCell, the PUCCH resource for the uplink transmission may be determined as a PUCCH resource corresponding to a BFD RS set in which a beam failure is detected (or not detected) in the SpCell among the first PUCCH resource and the second PUCCH resource. On the other hand, while the uplink transmission is suspended, if a beam failure associated with one of the first BFD RS set and the second BFD RS set is not detected in the SpCell, the PUCCH resource for the uplink transmission may be determined as a PUCCH resource corresponding to a BFD RS set in which a beam failure is detected (or not detected) in the one or more SCells among the first PUCCH resource and the second PUCCH resource.

On the other hand, one of the first beam failure and the second beam failure may be detected in one or more SCells in the cell group within a predetermined monitoring period, and a BFI counter value associated with one of the first BFD RS set and the second BFD RS set in the SpCell within the cell group may be less than a threshold. In this case, the PUCCH resource for the uplink transmission may be determined as a PUCCH resource corresponding to a BFD RS set in which beam failure is detected (or not detected) in the one or more SCells among the first PUCCH resource and the second PUCCH resource.

Meanwhile, after transmitting the uplink, a UE may receive DCI for PUSCH scheduling from a base station. In this case, a UE may transmit a MAC-CE for BFR to a base station through a PUSCH. Here, the MAC-CE for BFR may include at least one of an index of a cell in which a beam failure was detected, information on whether a new beam was found, new beam information, and an index of a BFD RS set in which a beam failure was detected.

Alternatively, if a UE has an available PUSCH (already allocated), uplink transmission (i.e., BFR request or link recovery request or scheduling request for BFR) through a PUCCH may be omitted, and may also transmit a BFR MAC CE to a base station through the corresponding PUSCH. That is, the transmission operation of the uplink transmission (i.e., BFR request, link recovery request, or scheduling request for BFR) may be omitted.

Based on one of the first beam failure or the second beam failure being detected in one or more SCells in one cell group, if a beam failure different from the one or more SCells is detected in the SpCell in the cell group after the uplink transmission but before the transmission of the BFR MAC-CE, the uplink transmission may be additionally performed on a PUCCH resource corresponding to a BFD RS set in which a beam failure is detected (or not detected) in the SpCell.

Beam failure may be declared by a UE that has assessed radio link quality in the above method, and the uplink transmission (i.e., BFR request or link recovery request) may be performed. In addition, a base station that received the uplink transmission (i.e., BFR request or link recovery request) may perform beam recovery for each TRP or each cell (or CC) through various processes such as beam RS transmission and beam reporting request, etc.

FIG. 11 is a diagram illustrating an operation of a base station for an uplink transmission method for beam failure recovery according to an embodiment of the present disclosure.

In reference to FIG. 11, FIG. 11 illustrates an operation of a base station based on the proposed methods described above (e.g., any one or a combination of one or more (detailed) embodiments in the detailed embodiments of Proposal 1, the detailed embodiments (solutions) for Embodiments 1 and 2, etc., any one or a combination of one or more of Proposals A to D). An example in FIG. 11 is for convenience of a description, and it does not limit a scope of the present disclosure. Some step(s) illustrated in FIG. 11 may be omitted according to a situation and/or a configuration. In addition, in FIG. 11, a base station is just one example, and may be implemented by a device illustrated in the following FIG. 12. For example, a processor 102/202 in FIG. 12 may control to transmit and receive a channel/a signal/data/information, etc. by using a transceiver 106/206 and may control to store a channel/a signal/data/information, etc. which will be transmitted or received in a memory 104/204.

In addition, an operation in FIG. 11 may be processed by one or more processors 102 and 202 in FIG. 12 and an operation in FIG. 11 may be stored in a memory (e.g., one or more memories (104, 204) in FIG. 12) in a form of a command/a program (e.g., an instruction, an executable code) for operating at least one processor (e.g., 102, 202) in FIG. 12.

Referring to FIG. 11, a base station transmits configuration information related to BFR to a UE (S1101).

The configuration information may include configuration information related to a BFD procedure and/or a BFR procedure described in the above-described proposed methods (e.g., any one or a combination of one or more (detailed) embodiments in the detailed embodiments of Proposal 1, the detailed embodiments (solutions) for Embodiments 1 and 2, etc., any one or a combination of one or more of Proposals A to D). In an example, the configuration information may include information on CORESET(s) / COREST group(s) related to each TRP (e.g., a TCI state(s) configuration related to a CORESET group / a CORESET group identifier (ID), etc.). In an example, the configuration information may include a CORESET configuration. In an example, the configuration information may include information on BFD RS(s) / BFD RS set(s) related to the BFD procedure, and as the case may be, BFD RS(s) / BFD RS set(s) may not be explicitly configured/indicated. In an example, the configuration information may include information on a plurality of RSs (reference signal) for a spatial relation assumption (e.g., a QCL relation) configured for a specific CORESET(/CORESET group) (i.e., a RS or a QCL type D RS that a QCL related to a spatial Rx parameter is configured). In an example, the configuration information may include configuration information on a BFRQ resource related to the BFR procedure.

For example, in a multi-TRP based transmission/reception operation, the configuration information may include information on BFD RS(s)/BFD RS set(s) associated with the BFD procedure associated with each TRP (for a specific cell or cell group). Additionally, the configuration information may include information on a PUCCH resource related to the BFR procedure associated with each TRP (for a specific cell or cell group). For example, the configuration information may include information on a first BFR RS set (including one or more RS) corresponding to TRP 1 and a second BFR RS set (including one or more RS) corresponding to TRP 2. Alternatively, the configuration information may not include explicit information on the first BFR RS set and the second BFR RS set. In this case, for example, a UE may determine the first BFR RS set and the second BFR RS set, respectively, including QCL (quasi co-location) RSs for spatial reception parameters configured in control resource sets (CORESETs) having different control resource set pool indexes. Additionally, the configuration information may include information on a first PUCCH resource for BFR corresponding to TRP 1 and a second PUCCH resource for BFR corresponding to TRP 2, for a TRP-specific BFR procedure. Additionally, the configuration information may include information on a PRACH resource for BFR, for a cell-specific BFR procedure.

Meanwhile, although not shown in FIG. 10, a base station may transmit information related to a BFD procedure and/or BFR procedure to a UE through MAC-CE signaling and/or DCI.

Based on one of a first beam failure and a second beam failure being detected according to an assessment of radio link quality for a first BFR RS set and a second BFR RS set, a base station receives uplink transmission for BFR from a UE (S1102).

For example, the BFD procedure and the BFR procedure may be performed based on the proposed methods described above (e.g., any one or a combination of one or more (detailed) embodiments in the detailed embodiments of Proposal 1, the detailed embodiments (solutions) for Embodiments 1 and 2, etc., any one or a combination of one or more of Proposals A to D).

A base station may transmit, to a UE, RSs included in each of a first BFR RS set (explicitly or implicitly configured) corresponding to a first TRP and a second BFR RS set (explicitly or implicitly configured) corresponding to a second TRP and radio link quality for the transmitted RS may be assessed. In addition, a first BFI and a second BFI may be counted, respectively, according to an assessment of radio link quality (increment a BFI value by 1 when radio link quality is worse than a predefined threshold) . And, when a count value for a first BFI and/or a count value for a second BFI reaches the maximum value, it may be determined that first beam failure and/or second beam failure has been detected. That is, radio link quality for each TRP may be individually assessed, a BFI may be counted individually for each TRP, and whether beam failure has been detected may be individually determined for each TRP. And, when either the first beam failure or the second beam failure is detected, a base station may receive the uplink transmission (i.e., BFR request or link recovery request) on the corresponding PUCCH resource among the first PUCCH resource and the second PUCCH resource.

Here, based on a type of cell (e.g., SpCell, SCell) in which one of a first beam failure and a second beam failure is detected within one cell group (e.g., MCG, SCG, PUCCH group, etc.), a PUCCH resource for uplink transmission may be determined Among a first PUCCH resource and a second PUCCH resource.

If one of the first beam failure or the second beam failure is detected in an SpCell (PCell/PSCell) within one cell group, the PUCCH resource for the uplink transmission may be determined as a PUCCH resource corresponding to a BFD RS set in which a beam failure is detected (or not detected) among the first PUCCH resource and the second PUCCH resource.

On the other hand, when one of the first beam failure and the second beam failure is detected in one or more SCells in one cell group, the PUCCH resource for the uplink transmission may be determined as one of the first PUCCH resource and the second PUCCH resource depending on whether the first beam failure and/or the second beam failure is detected in the SpCell within the cell group.

More specifically, when a beam failure different from the one or more SCells in the SpCell within the cell group prior to the uplink transmission due to detection of one of the first beam failure and the second beam failure for the one or more SCells is detected, the PUCCH resource for the uplink transmission may be determined as a PUCCH resource corresponding to a BFD RS set in which a beam failure is detected (or not detected) in the SpCell among the first PUCCH resource and the second PUCCH resource.

Alternatively, one of the first beam failure and the second beam failure may be detected in one or more SCells in the cell group within a predetermined monitoring period, and a BFI counter value associated with one of the first BFD RS set and the second BFD RS set in the SpCell within the cell group may be greater than or equal to a threshold. In this case, the uplink transmission may be suspended until a beam failure associated with one of the first BFD RS set and the second BFD RS set is detected in the SpCell. While the uplink transmission is suspended, if a beam failure associated with one of the first BFD RS set and the second BFD RS set is detected in the SpCell, the PUCCH resource for the uplink transmission may be determined as a PUCCH resource corresponding to a BFD RS set in which a beam failure is detected (or not detected) in the SpCell among the first PUCCH resource and the second PUCCH resource. On the other hand, while the uplink transmission is suspended, if a beam failure associated with one of the first BFD RS set and the second BFD RS set is not detected in the SpCell, the PUCCH resource for the uplink transmission may be determined as a PUCCH resource corresponding to a BFD RS set in which a beam failure is detected (or not detected) in the one or more SCells among the first PUCCH resource and the second PUCCH resource.

On the other hand, one of the first beam failure and the second beam failure may be detected in one or more SCells in the cell group within a predetermined monitoring period, and a BFI counter value associated with one of the first BFD RS set and the second BFD RS set in the SpCell within the cell group may be less than a threshold. In this case, the PUCCH resource for the uplink transmission may be determined as a PUCCH resource corresponding to a BFD RS set in which beam failure is detected (or not detected) in the one or more SCells among the first PUCCH resource and the second PUCCH resource.

Meanwhile, after receiving the uplink, a base station may transmit DCI for PUSCH scheduling to a UE. In this case, a base station may receive a MAC-CE for BFR from a UE through a PUSCH. Here, the MAC-CE for BFR may include at least one of an index of a cell in which a beam failure was detected, information on whether a new beam was found, new beam information, and an index of a BFD RS set in which a beam failure was detected.

Meanwhile, if a UE has an available PUSCH (already allocated), uplink transmission (i.e., BFR request or link recovery request or scheduling request for BFR) through a PUCCH may be omitted, and a base station may also receive a BFR MAC CE from a UE through the corresponding PUSCH. That is, the transmission operation of the uplink transmission (i.e., BFR request, link recovery request, or scheduling request for BFR) may be omitted.

Based on one of the first beam failure or the second beam failure being detected in one or more SCells in one cell group, if a beam failure different from the one or more SCells is detected in the SpCell in the cell group after the uplink transmission but before the transmission of the BFR MAC-CE, the uplink transmission may be additionally performed on a PUCCH resource corresponding to a BFD RS set in which a beam failure is detected (or not detected) in the SpCell.

Beam failure may be declared by a UE that has assessed radio link quality in the above method, and the uplink transmission (i.e., BFR request or link recovery request) may be performed. In addition, a base station that received the uplink transmission (i.e., BFR request or link recovery request) may perform beam recovery for each TRP or each cell (or CC) through various processes such as beam RS transmission and beam reporting request, etc.

General Device to which the Present Disclosure may be applied

FIG. 12 is a diagram which illustrates a block diagram of a wireless communication device according to an embodiment of the present disclosure.

In reference to FIG. 12, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performing uplink transmission for beam failure recovery (BFR) in a wireless communication system, the method performed by a user equipment (UE) comprising:

   receiving, from a base station, configuration information related to BFR; and
   based on at least one of a first beam failure and a second beam failure being detected according to an assessment of radio link quality for a first beam failure detection (BFD) reference signal (RS) set and a second BFD RS set, performing, to the base station, uplink transmission for BFR,
   wherein the configuration information includes information on a first PUCCH (physical uplink control channel) resource for BFR corresponding to the first BFD RS set and a second PUCCH resource for BFR corresponding to the second BDR RS set for a cell group, and
   wherein based on a type of a cell in which one of the first beam failure and the second beam failure is detected in the cell group, a PUCCH resource for the uplink transmission is determined among the first PUCCH resource and the second PUCCH resource.

2. The method of claim 1, wherein based on one of the first beam failure and the second beam failure being detected in a special cell (SpCell) in the cell group,
   a PUCCH resource for the uplink transmission is determined to be a PUCCH resource corresponding to a BFD RS set in which a beam failure is detected among the first PUCCH resource and the second PUCCH resource.

3. The method of claim 1, wherein based on one of the first beam failure and the second beam failure being detected in one or more secondary cells (SCells) in the cell group, a PUCCH resource for the uplink transmission is determined to be one of the first PUCCH resource and the second PUCCH resource depending on whether the first beam failure and/or the second beam failure is detected in an SpCell in the cell group.

4. The method of claim 3, wherein based on a beam failure different from the one or more SCells being detected in an SpCell in the cell group before the uplink transmission due to detection of one of the first beam failure and the second beam failure for the one or more SCells, a PUCCH resource for the uplink transmission is determined to be a PUCCH resource corresponding to a BFD RS set in which a beam failure is detected in the SpCell among the first PUCCH resource and the second PUCCH resource.

5. The method of claim 1, further comprising:

receiving, from the base station, downlink control information (DCI) for scheduling a physical uplink shared channel (PUSCH); and
transmitting, to the base station, a BFR medium access control (MAC)-control element (CE) through the PUSCH, wherein the BFR MAC-CE includes at least one of an index of a cell in which a beam failure is detected, information on whether a new beam is found, new beam information, and an index of a BFD RS set in which a beam failure is detected.

6. The method of claim 5, wherein based on one of the first beam failure and the second beam failure being detected in one or more secondary cells (SCells) in the cell group and a beam failure different from the one or more SCells being detected in an SpCell in the cell group after the uplink transmission and before transmission of the BFR-MAC CE, the uplink transmission is additionally performed on a PUCCH resource corresponding to a BFD RS set in which a beam failure is detected in the SpCell.

7. The method of claim 1, wherein based on one of the first beam failure and the second beam failure being detected in one or more SCells in the cell group within a predetermined monitoring period and a beam failure instance (BFI) counter value associated with one of the first BFD RS set and the second BFD RS set in an SpCell in the cell group being greater than or equal to a threshold, the uplink transmission is suspended until whether or not a beam failure associated with one of the first BFD RS set and the second BFD RS set is detected in the SpCell.

8. The method of claim 7, wherein based on a beam failure associated with one of the first BFD RS set or the second BFD RS set being detected in the SpCell, a PUCCH resource for the uplink transmission is determined to be a PUCCH resource corresponding to a BFD RS set in which a beam failure is detected in the SpCell among the first PUCCH resource and the second PUCCH resource.

9. The method of claim 7, wherein based on a beam failure associated with one of the first BFD RS set or the second BFD RS set being not detected in the SpCell, a PUCCH resource for the uplink transmission is determined to be a PUCCH resource corresponding to a BFD RS set in which a beam failure is detected in the one or more SCells among the first PUCCH resource and the second PUCCH resource.

10. The method of claim 1, wherein based on one of the first beam failure and the second beam failure being detected in one or more SCells in the cell group in a predetermined monitoring period and a BFI counter value associated with one of the first BFD RS set and the second BFD RS set in the SpCell within the cell group being less than a threshold, a PUCCH resource for the uplink transmission is determined to be a PUCCH resource corresponding to a BFD RS set in which a beam failure is detected in the one or more SCells among the first PUCCH resource and the second PUCCH resource.

11. The method of claim 1, wherein the first BFD RS set and the second BFD RS set include QCL (quasi co-location) RSs for spatial reception parameters configured in CORESETs having different control resource set (CORESET) pool indexes.

12. The method of claim 1, wherein the first BFD RS set and the second BFD RS set are respectively configured by higher layer signaling by the base station.

13. A user equipment (UE) of performing uplink transmission for beam failure recovery (BFR) in a wireless communication system, the UE comprising:

at least one transceiver for transmitting and receiving a wireless signal; and
at least one processor for controlling the at least one transceiver,

wherein the at least one processor configured to:

receive, from a base station, configuration information related to BFR; and
based on at least one of a first beam failure and a second beam failure being detected according to an assessment of radio link quality for a first beam failure detection (BFD) reference signal (RS) set and a second BFD RS set, perform, to the base station, uplink transmission for BFR,
wherein the configuration information includes information on a first PUCCH (physical uplink control channel) resource for BFR corresponding to the first BFD RS set and a second PUCCH resource for BFR corresponding to the second BDR RS set for a cell group, and
wherein based on a type of a cell in which one of the first beam failure and the second beam failure is detected in the cell group, a PUCCH resource for the uplink transmission is determined among the first PUCCH resource and the second PUCCH resource.

14. At least one non-transitory computer-readable medium storing at least one instruction, wherein the at least one instruction executable by at least one processor controls a device of performing uplink transmission for beam failure recovery (BFR) to:

receive, from a base station, configuration information related to BFR; and
based on at least one of a first beam failure and a second beam failure being detected according to an assessment of radio link quality for a first beam failure detection (BFD) reference signal (RS) set and a second BFD RS set, perform, to the base station, uplink transmission for BFR,
wherein the configuration information includes information on a first PUCCH (physical uplink control channel) resource for BFR corresponding to the first BFD RS set and a second PUCCH resource for BFR corresponding to the second BDR RS set for a cell group, and
wherein based on a type of a cell in which one of the first beam failure and the second beam failure is detected in the cell group, a PUCCH resource for the uplink transmission is determined among the first PUCCH resource and the second PUCCH resource.

15. A processing apparatus configured to control a user equipment (UE) for performing uplink transmission for beam failure recovery (BFR) in a wireless communication system, the processing apparatus comprising:

at least one processor; and
at least one computer memory operably connected to the at least one processor and storing instructions that, based on being executed by the at least one processor, perform operations comprising:

receiving, from a base station, configuration information related to BFR; and
based on at least one of a first beam failure and a second beam failure being detected according to an assessment of radio link quality for a first beam failure detection (BFD) reference signal (RS) set and a second BFD RS set, performing, to the base station, uplink transmission for BFR,
wherein the configuration information includes information on a first PUCCH (physical uplink control channel) resource for BFR corresponding to the first BFD RS set and a second PUCCH resource for BFR corresponding to the second BDR RS set for a cell group, and
wherein based on a type of a cell in which one of the first beam failure and the second beam failure is detected in the cell group, a PUCCH resource for the uplink transmission is determined among the first PUCCH resource and the second PUCCH resource.

16. A method of receiving uplink transmission for beam failure recovery (BFR) in a wireless communication system, the method performed by a base station comprising:

transmitting, from a user equipment (UE), configuration information related to BFR; and
based on at least one of a first beam failure and a second beam failure being detected according to an assessment of radio link quality for a first beam failure detection (BFD) reference signal (RS) set and a second BFD RS set, receiving, from the UE, uplink transmission for BFR,
wherein the configuration information includes information on a first PUCCH (physical uplink control channel) resource for BFR corresponding to the first BFD RS set and a second PUCCH resource for BFR corresponding to the second BDR RS set for a cell group, and
wherein based on a type of a cell in which one of the first beam failure and the second beam failure is detected in the cell group, a PUCCH resource for the uplink transmission is determined among the first PUCCH resource and the second PUCCH resource.

17. A base station of receiving uplink transmission for beam failure recovery (BFR) in a wireless communication system, the base station comprising:

at least one transceiver for transmitting and receiving a wireless signal; and
at least one processor for controlling the at least one transceiver,
wherein the at least one processor configured to:

transmit, from a user equipment (UE), configuration information related to BFR; and
based on at least one of a first beam failure and a second beam failure being detected according to an assessment of radio link quality for a first beam failure detection (BFD) reference signal (RS) set and a second BFD RS set, receive, from the UE, uplink transmission for BFR,
wherein the configuration information includes information on a first PUCCH (physical uplink control channel) resource for BFR corresponding to the first BFD RS set, a second PUCCH resource for BFR corresponding to the second BDR RS set for a cell group, and
wherein based on a type of a cell in which one of the first beam failure and the second beam failure is detected in the cell group, a PUCCH resource for the uplink transmission is determined among the first PUCCH resource and the second PUCCH resource.

FIG.1

FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

# FIG.3

## FIG.4

# FIG.5

Resource grid

A carrier
(up to 3300 subcarriers,i.e.,275 RBs)

A BWP

1 RB=12 subcarrier

1 RE

1 subcarrier

1 Symbol

k=0

l=0 . . . . .

# FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601    S602    S603    S604    S605    S606    S607    S608

· DL/UL ACK/NACK
· UE CQI/PMI RI REPORT
  USING PUSCH AND PUCCH

FIG.7

EP 4 329 210 A1

# FIG.8

Layer group #1
for CW #1

Layer group #2
for CW #1

TRP 1

TRP 2

UE1

(a)

Layer group #1
for CW #1

Layer group #2
for CW #2

TRP 1

TRP 2

UE1

(b)

EP 4 329 210 A1

## FIG.9

```
              Network
   ┌─────────┬─────────┐                              ┌────┐
   │  TRP 2  │  TRP 1  │                              │ UE │
   └─────────┴─────────┘                              └────┘
        │         │                           S901        │
        │         │   Configuration information    )      │
        │         │─────────────────────────────────────▶│
        │         │                           S902        │
        │         │  BFD/BFR related to MAC CE/DCI )       │
        │         │- - - - - - - - - - - - - - - - - - - ▶│
        │         │                           S903        │
        │         │                              )         │
   ┌────┴─────────┴──────────────────────────────────────┴────┐
   │                      BFD procedure                        │
   └────┬─────────┬──────────────────────────────────────┬────┘
        │         │                           S904        │
        │         │                              )         │
   ┌────┴─────────┴──────────────────────────────────────┴────┐
   │                      BFR procedure                        │
   └────┬─────────┬──────────────────────────────────────┬────┘
        │         │                                        │
```

## FIG.10

```
┌───────────────────────────────────────────────────┐
│  Receive configuration information related to BFR  │──── S1001
└───────────────────────────────────────────────────┘
                          │
                          ▼
┌───────────────────────────────────────────────────┐
│          Perform uplink transmission for BFR, based on        │
│     one of first beam failure and second beam failure         │
│   being detected according to assessment of radio link        │──── S1002
│   quality for first BFD RS set and second BFD RS set          │
└───────────────────────────────────────────────────┘
```

## FIG.11

```
┌───────────────────────────────────────────────────┐
│  Transmit configuration information related to BFR │──── S1101
└───────────────────────────────────────────────────┘
                          │
                          ▼
┌───────────────────────────────────────────────────┐
│          Receive uplink transmission for BFR, based on        │
│    on one of first beam failure and second beam failure       │
│   being detected according to assessment of radio link        │──── S1102
│   quality for first BFD RS set and second BFD RS set          │
└───────────────────────────────────────────────────┘
```

FIG.12

First Device (100)
- Processor(s) (102)
- Memory(s) (104)
- Transceiver(s) (106)
- 108

Second Device (200)
- Processor(s) (202)
- Memory(s) (204)
- Transceiver(s) (206)
- 208

## INTERNATIONAL SEARCH REPORT

| International application No. |
| --- |
| **PCT/KR2022/005584** |

### A. CLASSIFICATION OF SUBJECT MATTER

**H04B 7/0408**(2017.01)i; **H04B 7/06**(2006.01)i; **H04B 7/024**(2017.01)i; **H04W 76/18**(2018.01)i; **H04W 72/04**(2009.01)i; **H04W 74/00**(2009.01)i; **H04W 74/08**(2009.01)i; **H04W 72/12**(2009.01)i

According to International Patent Classification (IPC) or to both national classification and IPC

### B. FIELDS SEARCHED

Minimum documentation searched (classification system followed by classification symbols)

H04B 7/0408(2017.01); H04B 7/06(2006.01); H04B 7/08(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 빔 실패 복구(beam failure recovery), 빔 실패 검출 참조 신호(beam failure detection reference signal), 셀 그룹(cell group), PUCCH 자원(PUCCH resource), 셀 타입(cell type)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2021-029755 A1 (LG ELECTRONICS INC.) 18 February 2021 (2021-02-18) <br> See paragraphs [0420], [0425], [0428], [0430], [0435] and [0446]. | 1-17 |
| Y | NTT DOCOMO, INC. Discussion on beam management for MTRP. R1-2103562, 3GPP TSG RAN WG1 #104b-e, e-Meeting. 06 April 2021. <br> See section 3. | 1-17 |
| Y | INTERDIGITAL, INC. On Beam Management Enhancements for M-TRP. R1-2102435, 3GPP TSG RAN WG1 #104b-e, e-Meeting. 06 April 2021. <br> See section 2. | 3-10 |
| A | CATT. Discussion on beam management enhancements for multi-TRP. R1-2102601, 3GPP TSG RAN WG1 #104b-e, e-Meeting. 07 April 2021. <br> See sections 3.3-3.5. | 1-17 |
| A | US 2021-0028849 A1 (FG INNOVATION COMPANY LIMITED) 28 January 2021 (2021-01-28) <br> See paragraphs [0031]-[0067]; and figures 1-4. | 1-17 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 August 2022** | **04 August 2022** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/005584**

| Patent document cited in search report | | | Publication date (day/month/year) | Patent family member(s) | | | Publication date (day/month/year) |
|---|---|---|---|---|---|---|---|
| WO | 2021-029755 | A1 | 18 February 2021 | KR | 10-2022-0044803 | A | 11 April 2022 |
| | | | | US | 2022-0173788 | A1 | 02 June 2022 |
| US | 2021-0028849 | A1 | 28 January 2021 | WO | 2021-013182 | A1 | 28 January 2021 |

Form PCT/ISA/210 (patent family annex) (July 2019)